(19) Europäisches Patentamt
European Patent Office
Office européen des brevets

(11) EP 3 634 907 B1

(12) EUROPEAN PATENT SPECIFICATION

(45) Date of publication and mention of the grant of the patent:
**08.09.2021 Bulletin 2021/36**

(21) Application number: **18760004.4**

(22) Date of filing: **06.06.2018**

(51) Int Cl.:
***B82Y 30/00*** *(2011.01)* ***C01B 32/174*** *(2017.01)*

(86) International application number:
**PCT/IB2018/054053**

(87) International publication number:
**WO 2018/224980 (13.12.2018 Gazette 2018/50)**

(54) **MODIFIED NANOSTRUCTURED CARBON MATRIX, CONTAINING SUCH A MATRIX SYSTEM AND INCLUDING SUCH SYSTEM BIOSENSOR AND A METHOD FOR THE DETERMINATION OF AN ANALYTE IN A SAMPLE USING SUCH BIOSENSOR SYSTEM AS WELL AS THE APPLICATION OF A PYRROLE BENZOIC ACID DERIVATIVE FOR THE MODIFICATION OF THE NANOSTRUCTURED CARBON MATRIX**

MODIFIZIERTE NANOSTRUKTURIERTE KOHLENSTOFFMATRIX, DIE SOLCH EIN MATRIXSYSTEM ENTHÄLT UND SOLCH EINEN SYSTEMBIOSENSOR EINSCHLIESST, UND VERFAHREN ZUR BESTIMMUNG EINES ANALYTEN IN EINER PROBE UNTER VERWENDUNG SOLCH EINES BIOSENSORSYSTEMS SOWIE ANWENDUNG EINES PYRROLBENZOESÄUREDERIVATS ZUR MODIFIZIERUNG DER NANOSTRUKTURIERTEN KOHLENSTOFFMATRIX

MATRICE DE CARBONE NANOSTRUCTURÉE MODIFIÉE, CONTENANT UN SYSTÈME DE MATRICE ET COMPRENANT UN BIOCAPTEUR DE SYSTÈME ET PROCÉDÉ DE DÉTERMINATION D'UN ANALYTE DANS UN ÉCHANTILLON À L'AIDE D'UN TEL SYSTÈME DE BIOCAPTEUR AINSI QU'APPLICATION D'UN DÉRIVÉ D'ACIDE PYRROLE BENZOÏQUE POUR LA MODIFICATION DE LA MATRICE DE CARBONE NANOSTRUCTURÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2017 PL 42180417**

(43) Date of publication of application:
**15.04.2020 Bulletin 2020/16**

(73) Proprietor: **Uniwersytet Warszawski**
**00-927 Warszawa (PL)**

(72) Inventors:
- **KOWALEWSKA, Barbara**
  **05-126 Nieporet (PL)**
- **JAKUBÓW, Katarzyna Helena**
  **37-400 Nisko (PL)**
- **PIOTROWSKI, Piotr**
  **07-410 Ostroleka (PL)**

(74) Representative: **Patpol Kancelaria Patentowa Sp. z o.o.**
**Nowoursynowska 162J**
**02-776 Warszawa (PL)**

(56) References cited:
**WO-A1-96/36631 CN-A- 105 348 291**

- **BARBARA KOWALEWSKA ET AL: "The impact of immobilization process on the electrochemical performance, bioactivity and conformation of glucose oxidase enzyme", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, vol. 238, 26 July 2016 (2016-07-26), pages 852-861, XP055512956, NL ISSN: 0925-4005, DOI: 10.1016/j.snb.2016.07.138 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 634 907 B1

- **WANG AIJIAN ET AL: "A 1,3-dipolar cycloaddition protocol to porphyrin-functionalized reduced graphene oxide with a push-pull motif", NANO RESEARCH, TSINGHUA UNIVERSITY PRESS, CN, vol. 8, no. 3, 1 October 2014 (2014-10-01) , pages 870-886, XP035467368, ISSN: 1998-0124, DOI: 10.1007/S12274-014-0569-X [retrieved on 2014-10-01]**

## Description

### The subject of the invention

The present invention provides a nanostructured carbon matrix, comprising such matrix system and containing such system biosensor. Furthermore, the present invention also relates to a method for determination of an analyte in a sample. The present invention also relates to the use of a pyrrole benzoic acid derivative for the modification of the graphene matrix surface and to the use of a biosensor comprising graphene matrix according to the invention as an electrode in a biofuel cell.

### Field of the invention

The solutions according to the present invention find an application in many fields of technology. For example, the modified carbon matrix according to the invention can be used as a substrate (support) for immobilization of biomolecules in biosensors. It may also be applied in the modification of the surface of electrodes being a part of the bicfuel cells.

### State of the art

The nanostructures based on carbon, including as well carbon nanotubes and nanowires as two-dimensional graphene nanoflakes (nanosheets), are the subject of research by many research groups due to their excellent conductive properties. Systems based on such carbon nanostructures find many applications not only in electronic devices, including, in particular, biosensors and biofuel cells, but also as materials useful for the production of flexible storage media, or for bio-imaging and drug administration and as a paper for dressing materials.

Among the carbon nanostructures, the subject of the largest number of works were previously carbon nanotubes. In applications utilizing particularly favorable electrical properties of such systems, such nanotubes are Single-Walled NanoTubes (SWNT) composed of one layer of atoms, coiled in a tube with a nanometer diameter.

In the prior art, it has been repeatedly suggested to immobilize the biochemical receptor on a matrix formed from just such a nanostructured carbon material as nanotubes or nanowires or carbon nanofibers (see, e.g., Vamvakaki, V, Tsageraki, K. and Chaniotakis, N: Anal., 2006, 78 , 5538 - 5542, Kowalewska B., Jakubow K., Sensors and Actuators B 238 (2017) 852-861). In such a typical, described in the prior art biosensor that generates electrical signals, nanostructured carbon materials are to fulfill dual functions, namely, provide a matrix for the receptor immobilization, and act as an electrical signal transducer generated by a biochemical reaction at the same time. Thus, the immobilization of such a biochemical receptor on a nanostructured matrix formed of carbon material allows the direct electron transfer from the receptor to the surface, on which the system is immobilized.

However, as indicated in the prior art (see, e.g., US patent description 20130122531), the use of nanowires or nanofibers as well as carbon nanotubes in biosensors, is limited by the fact that the body of all these structures is at least partially formed of closed flakes, which prevents achieving a high degree of functionalization. This is due to the fact that the adsorption or covalent immobilization of the receptor can essentially only be achieved at the functionalized ends of open nanotubes. For this reason, the amount of biochemical receptors, such as enzymes that can be immobilized on carbon nanotubes, is significantly limited, which in turn leads to the formation of matrix composites with incompletely optimized parameters, such as sensitivity and determination stability.

It is also expected that carbon nanofibers or nanowires, due to their more open surface structure, should have a much larger surface for functionalization. Carbon nanofibers are cylindrical nanostructures containing graphene layers arranged as cones, conical cups or plates. Thus, in the case of carbon nanofibers, a much higher ratio of the number of exposed functional groups to volume is expected compared to the surface of carbon nanotubes. In addition, nanofibers have a higher conductivity than nanotubes in the prior art, thereby providing larger signals transmitted to the substrate (support) on which they are immobilized, such as the supporting metallic electrode substrate (e.g., metal wire) or semiconductor substrate (in the case of an integrated plate with many biosensors), which in turn provides a better signal-to-noise ratio, increases accuracy and speeds up the filtering of obtained results. However, carbon nanofibers show remarkable hydrophobicity, which is very unfavorable for the adsorption of biochemical receptors.

Therefore recently, intensified research on other carbon nanostructures, such as fullerene, or the most developed graphene in this direction, is carried out.

### Fullerene

Although, initially no particular attention was paid to the new allotropic form of carbon found in the mid-1980s, fullerenes became the subject of a number of studies in the following decade, thanks to the discovery of their extremely desirable superconducting and semiconductor properties. In addition, due to the low thermal mass, thin fullerene films

can be quickly heated by electric heating of their support and thus quickly desorb the organic vapors from their surface.

These features of fullerenes have led to general attempts to use them in biosensors. In particular, in the last twenty years, the research into surface modified fullerenes, referred to as exohedral fullerenes, has been intensified, the surface of which is modified by attached molecules with exposed different functional groups, most often having the function of a receptor.

For example, the publication WO 1996036631 discloses fullerenes substituted with numerous functional groups, methods for their preparation and characteristics confirming the utility of such systems in many applications, especially in pharmacy and diagnostics.

Fullerenes are also used in solutions that can find the application as biochemical marking materials. For example, US 20100139744 discloses the use of fullerene as an electron transfer molecule for functionalization of nanoparticles, such as metallic nanoparticles.

However, there are few reports on solutions utilizing fullerenes as a substrate for binding specific receptors. Admittedly, for example, the publication WO 2016161255 discloses a fullerene based biosensor for detecting an analyte, which biosensor includes: a layer of graphene nanoparticles, carbon nanotubes or fullerene modified with a layer of one or more polymers on a carbon matrix, strengthening $\pi$-$\pi$ interactions in the carbon layer and a ligand layer present on the polymer layer for determining ocular defects, however, such a sandwich system utilizes fullerenes only as one of numerous elements necessary for the functioning of the biosensor.

**Graphene**

Such unusual interest in graphene is caused by its extremely interesting mechanical and electrical properties. A large part of the research focuses on the use of graphene layers for applications related to electronic devices, due to its excellent conductivity, extreme mechanical strength, flexibility and transparency.

Graphene is a single-layer, two-dimensional layer of carbon atoms with a honeycomb shaped crystal lattice that can be produced by mechanical splitting of graphite monocrystals, e.g. HOPG (Highly Oriented Pyrolytic Graphite), using an adhesive tape or by depositing a carbon layer with a hexagonal structure from the gas phase, e.g. by Chemical Vapor Deposition (CVD)on various types of solid substrate(supports). The spread of such a layer can range from a few mm to several dozen cm.

Among the many advantages characterizing graphene, one can mention, inter alia, very good heat and electricity conductivity (measured thermal conductivity is usually from 4840 $\pm$ 440 to 5300 $\pm$ 480 W/mK, so it is larger by an order of magnitude than the values recorded for silver, namely 429 W/mK), low resistivity, a very high electron mobility at room temperature (assuming scattering only on phonons: $\mu \approx$ 200 000 $cm^2/Vs$, and thus, it is greater by an order cf magnitude than the values reported for silicon - 1500 $cm^2/Vs$ or gallium arsenide - 8500 $cm^2/Vs$). Moreover, a significant electron flow rate of 1/300 of the speed of light, allows the study of relativistic effects on the electron moving in the conductor. Graphene also has high tensile strength of 130 GPa, compared to approx. 0.4 GPa determined for structural steel or Kevlar. It was also demonstrated that the oxidized graphene membrane does not permeate gases, even helium atoms, being completely permeable to water at the same time. Such a set of characteristics of graphene provides the possibility of its use for filtration at room temperature, e.g. in order to increase the concentration of alcohol without a classical distillation or refrigeration or economical production of drinking water from seawater.

One of graphene forms is flaky graphene (graphene in the form of flakes), usually present as a powder or suspension. This substance is characterized by the above-mentioned excellent electrical properties and high thermal conductivity. It is a mixture of graphene flat structures in the form of flakes, with a structure in the form of a stack consisting of several graphene layers (less than 10 layers) with sizes ranging from a few nm to several hundred $\mu$m. The distances between the graphene layers are in the range of 0.35-0.36 nm. Graphene in the form of flakes can be produced directly from the graphite powder, e.g. by intense grinding, but the efficiency and quality of such product is usually very low. It is applicable in, inter alia, electrodes in supercapacitors (due to very good electrical properties), electrodes in solar cells (its transparency and good electrical conductivity is used), fuel cells (graphene in the form of flakes is characterized by a large surface area, it is a good adsorption material for the hydrogen storage), chemical and biological sensors, catalysts, microwaves absorbent materials, graphene composites - polymers, graphene composites - nanoparticles (such as metal nanoparticles, semiconductors, metal oxides that are deposited during reduction).

Graphene oxide (GO) is the most commonly used form of graphene in industry and laboratory research. Reduced graphene oxide is obtained by the reduction of graphene oxide. This reduction can be performed chemically, thermally or by irradiation (UV or IR) until the powder is obtained. There are several methods for the preparation of graphene oxide. One of the most popular is the Hummers method applied for the first time in 1958. In this method, graphite is oxidized by the use of potassium permanganate in the sulfuric acid (VI) solution containing potassium nitrate(V). This method is the basis for many subsequent methods of graphene oxide production improved over the years (eliminating, among other things, the release of harmful nitrogen oxides), from which after reduction, graphene flakes (sheets) (rGO - reduced graphene oxide) are obtained. Graphene oxide is easy to modify, and due to its free oxygen and hydroxyl

groups, it also has antibacterial properties.

The great electrical conductivity of this product is an important element in many practical applications. Graphene oxide, in the form of paper, is an excellent membrane with controlled permeability, and due to the strong UV emission can be used in photodynamic therapy and photonic devices. In addition, graphene oxide is widely used as a material for flexible storage media, as well as in medicine for bio-imaging and drug delivery and as a paper for dressing materials due to the bactericidal properties of graphene oxide.

In these diverse and numerous areas of life, there is an ever-increasing demand for improved, including in particular, less costly and more productive, providing greater product efficiency, biosensors. In particular, there remains a strong need to develop fast and inexpensive diagnostic methods that would allow, inter alia, monitoring of production processes in the pharmaceutical and food industry, screening tests, diagnostics of patients in non-hospital conditions (outpatient conditions), or testing the suitability of water for consumption. Traditional methods offered by analytical chemistry do not fully meet the requirements set for them, as they are in most cases time-consuming studies requiring special apparatus and appropriate reagents.

**Devices, in particular biosensors, essentialy based on graphene**

Numerous devices processing chemical information for the parameters that can be further processed, commonly referred to as sensors are known in the prior art. One of the types of such devices are so-called biosensors in which the receptor element is a biological material. The prefix "-bio" used in the name of this type of sensor refers not tc the type of the determined substance, but to the type of sensor. Biosensors are usually characterized by the sufficient selectivity and high affinity for the tested compound, making them an important element utilized in various applications of analytical methods.

In the modern analytics, sensors are known, in particular biosensors, which work thanks to the use of selected enzymes, including enzymes belonging to oxidoreductase and dehydrogenase classes. Examples of such sensors are biosensors with potentiometric detection, biosensors with amperometric detection or multi-enzyme sensors.

Examples of analytes and enzymes commonly used in enzymatic biosensors with potentiometric detection are also urea and urease; glucose and glucose oxidase; glucose and glucose dehydrogenase; lipids and lipase; lactate and lactate oxidase.

Examples of analytes and enzymes commonly used in enzymatic biosensors with amperometric detection are glucose and glucose oxidase; polyphenols and polyphenol oxidase; cholesterol and cholesterol oxidase; ethanol and alcohol dehydrogenase; pesticides and acetylcholine esterase.

Depending on the utilized enzyme, we can deal not only with different functionality, but also with different selectivity of the biosensor.

For example, an essential element of diabetes therapy is the repeated measurement of the glucose concentration during the day. The *Diabetes Control and Complications Trial* report recommended that patients with diabetes should measure their blood glucose levels at least four times a day. The need to use just such measurement regime became the basis for works and development of glucose biosensors. The glucose concentration can be easily determined using high performance liquid chromatography (HPLC), and this method is usually used (as in the case of other sugars) in fermentation systems. It is clear, however, that such methods will not be useful when testing glucose in body fluid. The proposed alternative method is a method based on enzymatic analysis using the glucose oxidase enzyme (GOx).

Glucose oxidase is an enzyme from the class of oxidoreductases, which catalyzes the oxidation reaction of β-D-glucopyranose (one of the forms of glucose) to gluconic acid.

However, although glucose oxidase has a high substrate specificity and better thermal stability and it can be produced in a low cost, in the prior art the problem is that this enzyme is significantly affected by dissolved oxygen, which in turn affects the measurement results.

In response to such an inconvenience, it was found that in addition to sensors using glucose oxidase, a glucose sensor using glucose dehydrogenase was also developed. The advantage of these glucose dehydrogenase-based solutions is that these sensors are not degraded because glucose dehydrogenase does not interact with the oxygen dissolved in the measured sample. This is an important advantage because it is possible to obtain appropriate (proper) measurements without risking errors, even when the measurement is carried out in an environment, in which the oxygen partial pressure is low or when a high concentration sample requiring a large amount of oxygen is used for the measurement. Some improvement in the parameters of glucose biosensors was also obtained by replacing glucose oxidase with pyrroloquinoline quinone-dependent glucose dehydrogenase (PQQ-GDH). For example, the publication "PQQ-enzymes in biosensors design" (Laurinavicius et al., Biocybernetics and Biomedical Engineering, 2001, 21 (4), 21-35) describes methods for purification of several new PQQ-dependent dehydrogenases. These dehydrogenases were used in glucose, ethanol and glycerol biosensors. The publication describes in detail not only the of immobilization methods of mentioned enzymes on amperometric sensors, but also their experimental characteristics.

In turn, the patent document PL 207576 describes a new glucose dehydrogenase and its production method,

a glucose sensor using an enzymatic electrode containing this enzyme and a kit for glucose determination.

Many electrochemical biosensors useful for the determination of methanol and ethanol are also known. Among the most frequently used, the devices of the amperometric type, using oxygen or peroxygen electrodes, acting as physical transducers, and alcohol oxidase of methylotrophic yeast as selective bioelement, deserve special attention. Alcohol oxidase is an enzyme that uses oxygen in the oxidation of methanol according to the following reaction:

$$CH_3OH + O_2 \rightarrow HCHO + H_2O_2$$

Such biosensors are used, among others, for determining the methanol content in industrial wastewater.

Reduced graphene oxide, due to its unique properties, is an ideal material for the construction of graphene matrices and graphene sensors, and in particular for the production of biosensors.

A single layer of carbon atoms cooperates (collaborates, works) very well not only with many enzymes, but also with other macromolecules, including in particular various polymers, also natural ones, such as DNA, which makes that graphene is often used in the creation of many biosensors. The creation of new biosensors, which will allow for error-free, and thus rapid, identification of diseases, is the research material of many genetic laboratories in the world. A single helix of DNA permanently and strongly connects to the graphene coating, this advantage was used to build various sensors and genosensors.

Typically, a single DNA helix of the gene of the sought pathogen is placed on the graphene surface. The DNA is made of a double helix, which is why one of the separated threads looks for complementary pair. In the case, when the graphene-based sensor is immersed in a blood sample or other body fluid, a single strand of DNA will "catch" its specific counterpart. If the factor, we are looking for, will catch a particular molecule, it will stick to the biosensor, which will generate a signal that can be registered.

Furthermore, as disclosed in patent description WO 2014166535, specific graphene properties allow not only the identification and detection of small molecules, including by binding to graphene surface macromolecules such as DNA, but also it can be used for sequencing such natural polymers as DNA/RNA, proteins, sugar chains. This is possible, among others, thanks to the fact that graphene is able to convert light into electricity. This property allows the induction of voltage change on the graphite layer. Secondly, the electron transfer in graphene occurs only in two dimensions in a narrow band. This property allows for detecting electrons introduced by the laser light and determining the origin of the point, at which the laser light intersects the graphene layer. However, this method of sequencing is still not practical, not only because of its time-consuming but also still a high cost. The determination of compounds carried out with the use of appropriate graphene-based matrices seems to be much more common.

The detection of biologically active compounds, in particular low molecular weight compounds, is of great importance from the point of view of biomedical sciences and environmental protection. In medicine, biosensors are used to monitor blood glucose levels, cancer diseases and HIV virus detection. On the other hand, in the field of environmental protection, biosensors are used as small devices to the quality check of water purity, detection of heavy metals and toxic gases. Biosensors can also detect threats that are caused by biological weapon.

Graphene and its derivatives are very often used in the construction of devices used in cancer diagnostics. One of the biggest and most important problems observed by clinicians is the late detection of cancer disease. Considering the large number of patients dying of cancer every year, it can be concluded that it is necessary to develop much more sensitive methods than those currently available that will enable early diagnosis of the disease. In medical diagnostics, aptasensors are often used, which utilize aptamers as a sensitive element. Aptamers belong to artificial oligonuclectides that are characterized by exceptional selectivity and specificity. Such molecules are able to bind to their target molecule in a very strong manner, which makes it possible, using aptamers, to distinguish even similar molecules. The main advantage of these molecules is the possibility of their easy modification, which makes them very useful in biotechnology. The detection and identification of cancer cells consists in locating and identifying markers that will appear only in altered cells. To identify such cells, special probes are needed, as a variety of tumor markers can be found in the blood morphology elements, free DNA and in plasma proteins. At the turn of recent years, these macromolecular molecules, called aptamers, are used to identify tumor markers. They can also be used to detect viruses and microorganisms. These new solutions, based on the immobilization of macromolecules on the surface of graphene, allow fast and cheap oncological diagnostics.

In addition, graphene substrates are quite commonly found in nanotechnology during the production of nonobiosensors. Such graphene-based nanobiosensors are capable of extremely fast detection of many markers allowing recognition of a variety of cases, such as a number of diseases, including, in particular, metabolic and cancer diseases. One of the examples of such nonobiosensors is a nanobiosensor based on a gold electrode substrate covered with silicon nanoparticles with graphene oxide, which nanobiosensor is designed to work in physiological conditions.

The reduction of graphene oxide enables the attachment of the antibody to the biosensor, so that very selective sensors can be obtained providing tools useful for the detection of multiple antigens differentiated by the used antibody. Sensors that have been produced on the basis of graphene have a huge advantage over known and previously used conventional sensors because, for example, they are able to repeatedly register the presence of a single molecule of

the tested substance.

In relation to such biosensors, the breakthrough turned out to be the use of the phenomenon of biological recognition (*Biological Recognition Event*), thanks to which it became possible to design biosensors, which are selective, high-sensitivity systems analyzing selected substances at the molecular level. In general, such biosensors are analytical devices used to confirm the presence of certain substances, analytes, in the tested volume.

The process of detecting an analyte using a biosensor can be divided into two consecutive stages - the stage of combining the searched substance and the signal processing stage. The connection of the analyte is possible due to the modification of the sensor surface with a biological substance that forms the receptor layer. The analyte is either attached by selective binding to the bioreceptor to form a thermodynamically stable complex, referred to as a guest-host complex (a group of biosensors using supramolecular complexes), or by the reaction with an enzyme acting as a bioreceptor (biosensors using a biocatalyst). The receptor-analyte interactions are the basis for the transformation of the biochemical phenomenon into the final analytical signal, usually electric. The transducer can be any micromechanical system (whose response is a deflection or shift), an amperometric unit (whose response is changing the electrical properties of the system), or a photonic system (whose response is changing the optical properties of the medium). The standard method of immobilizing receptors on the surface of a biosensor, using biocatalysts, is their physical or chemical bonding on the substrate (support) or their immobilization in an inert protein matrix. Graphene is particularly susceptible to more stable chemical modification and thus stable receptor binding compared to other carbon nanostructures.

Graphene also contributes significantly to the development of a number of other electrochemical solutions. Also in such solutions, due to their specific physical and chemical properties, graphene-based materials are used for the development of electrochemical sensors. Example sensors made on the basis of graphene could be used simultaneously for the determination of ascorbic acid, dopamine, as well as uric acid. Detection of biological molecules using electrochemical methods is currently a very important application of graphene-based electrodes and is still developed for looking for selective and efficient detectors. It can be concluded that graphene is undoubtedly one of the best materials used in the creation of new electrochemical sensors.

Methods for obtaining graphene layers on a substrate and a paste containing graphene nanoplates and an organic carrier are known in the prior art. For example, the patent document PL-222519 describes the use of graphene layers in electronics and microelectronics for the production of, inter alia, chemical sensors and biological substances with high sensitivity, selectivity and response speed, including gas sensors. However, the said application relates only to the use of graphene layers in the form of a paste, including graphene nanoplates and an organic carrier in the form of a polymethyl methacrylate solution(PMMA).

In turn, the patent description US2012/0214172 discloses biosensors based on a graphene oxide nanostructure or graphene or their hybrids and at least one or more nanoparticles in contact with this nanostructure and one or more biomolecules in contact with one or more nanoparticles. However, due to the lack of full control over the number of active sites appearing on the surface of such electrode, the results obtained with the use of such sensors are not repeatable and such biosensors could not serve to clearly determination the level of the analyte.

Other publications disclose biosensors based on unmodified and modified graphene matrices with bound, both covalently and also through van der Waals interactions, directly on the surface of such a modified graphene matrix with enzymes. For example, in Kowalewska B., et al. ("The impact of immobilization on the electrochemical performance, bioactivity and conformation of glucose oxidase enzyme", Sensors and Actuators B 238 (2017), 852-861) disclose biosensors, in which the enzyme molecule, glucose oxidase, is bound by intermolecular interactions with modified 4-(pyrrol-1-yl) benzoic acid (hereinafter: PyBA) graphene matrix of the biosensor. Although, due to the modification of the graphene surface with PyBA molecules, the results, obtained for such a system, indicate a higher sensitivity of such a system, due to the lack of control over the organization, including the orientation of surface enzyme molecules, as well as lack of durability of such systems, they do not constitute biosensors with unchanging, long-lasting high sensitivity and satisfactory lifetime. Similar systems are also described in publication US20120116094 disclosing new compositions containing a matrix of graphene or graphene oxide containing at least one specific functional group, associated with graphene or graphene oxide, allowing for the direct determination of analytes, without the participation of additional enzyme molecules, by their adsorption or trapping, or their filtering (e.g. analytes in gaseous and/or liquid form). As indicated herein, the assay can be carried out by functionalizing the nanostructured carbon matrix with perfluoroalkyl and/or nitroaromatic groups that can interact by binding to toxins, contaminants or other undesirable materials. However, when such interaction is based on noncovalent or electrostatic interactions, such systems incorporated into biosensors provide sensors with much lower durability and do not guarantee reproducible results.

Thus, in the solutions known hitherto, the results obtained for sensors, in particular for graphene matrices based biosensors, whether for matrices modified by binding biomolecules directly to the matrix or via additional connectors, are still unsatisfactory.

It is still desirable to provide such a biosensor that would guarantee a high sensitivity of the system, allowing the determination of already low concentrations of analyte, it was reversible, accurate and reproducible. In particular, it is desirable to develop such a base matrix that would allow the immobilization of various molecules, and thus the

determination of different analytes, while retaining its function of ensuring high sensitivity for all systems formed thereunder. It is also highly desirable that the system obtained on the basis of such a matrix be reusable. It would also be desirable to provide such a matrix that is easy to prepare and relatively cheap, providing a base system for the common use. Such a system should therefore be not only cheap, but also universal.

Such system should also be suitable for many applications - enable to determine analytes in both gas and liquid systems.

For example, the base matrix could find practical applications in traditional biosensors, but also in systems for non-invasive determination of the analyte level, such as plasters, patches or, in particular, surface tattoos. Examples of such transdermal or skin systems for the determination of analytes, such as glucose, are described, inter alia, in the publications of Bandodkar AJ, et al. ("Tattoo-Based Noninvasive Glucose Monitorng: A Proof-of-Concept Study", Anal. Chem., 2015, 87, 394-398 and "Noninvasive Alcohol Monitoring Using a Wearable Tattoo-Based Iontophoretic-Biosensing System", ACS Sens., 2016, 1, 1011-1019 or also in publication US 20170014572).

The inventors of the present invention have surprisingly found that due to a specific modification of a commonly used graphene matrix using a covalently linked linker, it can be obtained a matrix that will meet all of the above requirements, will be extremely versatile and allow further binding of many biomolecules while orienting them and maintaining control over the covering degree the binding places of the matrix surface. The systems formed on the basis of the matrix of the invention are free from the drawbacks observed with similar systems known in the prior art, are stable, and the reactions used to determine different analytes are reversible. Thus, biosensors based on graphene matrix system and biomolecules are cheap, practical to use and provide repeatable results of determinations, and thanks to the highly improved kinetics of charge transfer across the interface, they exhibit durability and a short response time. These and other advantages of the present invention will be evident in the light of the following description of the present invention and, in particular, of its embodiments. Thus, these and other related and the above-mentioned disadvantages of the prior art solutions have been overcome thanks to the matrix proposed herein, and thus all of the objects of the invention have been achieved.

## The essence of the invention

The essence of the present invention as proposed by the inventors is the chemically modified nanostructured carbon matrix, in particular the graphene matrix, which is modified by covalent bonding of the pyrrole benzoic acid derivative (fPyBA) with carbon atoms of the nanostructured carbon matrix, whose role is largely based on increasing the conductivity in the bioelectrocatalytic layer and effective immobilization of biomolecules on its surface. Such system also strengthens the rapid exchange of electrons between the active center of the biomolecule (especially the covalently bound enzyme) and the analyte determined in such system. In composite systems used to construct biosensors, the presence of such a graphene surface modifier significantly improves their durability, and additionally introduces new carboxyl functional groups of particular importance for the immobilization of biomolecules to the surface of the composite layer. It is worth emphasizing that as indicated above referring to the state of the art, unmodified carbon nanostructures show a significant tendency to agglomerate and create large clusters, which in turn negatively affects their physicochemical properties. For a change, the nanostructures modified in accordance with the present invention, due to electrostatic repulsion, are dispersed and form a stable and homogeneous suspension for several months.

## A brief description of the invention

The present invention provides a nanostructured carbon matrix, including in particular a matrix based on graphene, graphene oxide or based on a combination thereof, which matrix is modified with a pyrrole benzoic acid derivative with exposed carboxyl groups capable of forming an amide bond. The subject of the invention is also a carbon nanostructure system, in particular for use in biosensors, comprising a nanostructured carbon matrix according to the invention. The carbon nanostructure system of the invention is an important element of the biosensor. Furthermore, the present invention also relates to a method for the determination of an analyte in a sample comprising the steps of:

- contacting the biosensor according to the invention with a sample containing the determined analyte, and
- monitoring of changes in the electrical characteristics of the system.

The present invention also relates to the use of a pyrrole benzoic acid derivative (fPyBA) for the surface modification of a graphene matrix and the use of biosensor comprising such graphene matrix according to the invention as an electrode in a biofuel cell.

## Detailed description of the invention

The present invention provides a nanostructured carbon matrix modified on the surface with pyrrole benzoic acid derivative with exposed, unbound carboxyl groups capable of forming an amide bond,, in particular, forming an amide bond with an amino moiety of enzymes modifying such a modified nanostructured carbon matrix. The pyrrole benzoic acid derivative according to the invention is a 4-(pyrrol-1-yl) benzoic acid derivative.

The pyrrole benzoic acid derivative modified nanostructured carbon matrix according to the invention is characterized by the presence of following structures of the formula A or B on the matrix surface,

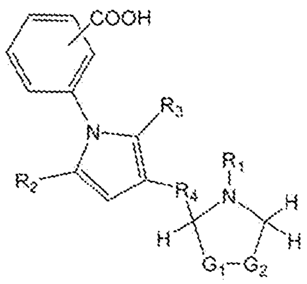

**A**

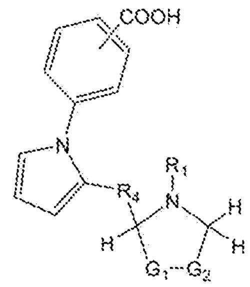

**B**

formed by modifying the 4-(pyrrol-1-yl) benzoic acid derivative of the nanostructured carbon matrix with carbon atoms of a nanostructured carbon matrix, with which this derivative is bound by an amide bond, in which the structures:

$G_1$ and $G_2$ are adjacent carbon atoms on the surface of the nanostructured carbon matrix,
$R_1$ is a hydrogen atom, a $C_{1-6}$ alkyl group, a $C_{2-6}$ alkenyl group, a $C_{2-6}$ alkynyl group, a $C_{3-6}$ cycloalkyl group, an aryl group, a $C_{1-6}$ alkoxy group,
$R_2$ and $R_3$ are independently hydrogen atom and where the 6-membered aromatic ring is substituted in the ortho, meta or para position by the carboxyl group, and n is an integer number of 0 or 1, and
$R_4$, when present, is a $C_{1-6}$ alkyl group, a $C_{2-6}$ alkenyl group, a $C_{2-6}$ alkynyl group, and wherein the pyrrole ring is bonded in the 1 or 2 position with a pyrrolidine ring bonded directly or through the linker $R_4$ with the $G_1$ and $G_2$ atoms of the nanostructured carbon matrix and where the structure of formula A or B may exist in different stereoisomeric forms as well as quaternary ammonium or carboxylic salts. Preferably, n equals zero and hence $R_4$ is absent and $R_1$ represents a hydrogen atom, a $C_{1-6}$ alkyl group, a $C_{2-6}$ alkenyl group, a $C_{2-6}$ alkynyl group, a $C_{3-6}$ cycloalkyl group or aryl. Particularly preferably, $R_1$ represents a hydrogen atom, a $C_{1-6}$ alkyl group, a $C_{2-6}$ alkenyl group or a $C_{2-6}$ alkynyl group. Even more preferably, $R_1$ represents a hydrogen atom, a $C_{1-6}$ alkyl group, a $C_{2-6}$ alkenyl group or a $C_{2-6}$ alkynyl group. Most preferably $R_1$ represents a hydrogen atom or a $C_{1-6}$ alkyl group. In particularly preferably it forms a structure of the formula B'

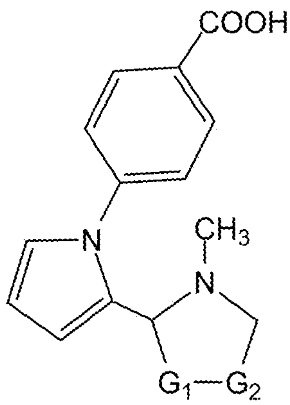

Formula B'

According to a preferred embodiment of the invention, the graphene matrix is a matrix based on graphene, graphene oxide or on the basis of a combination thereof.

The present invention also provides a nanostructured carbon matrix system, particularly useful for the application in biosensors, comprising a nanostructured carbon matrix of the invention and at least one receptor element, in which

the nanostructured carbon matrix is in particular a graphene-based nanostructured carbon matrix, and the receptor element is any element capable of forming a covalent amide bond with exposed carboxyl group of the pyrrole benzoic acid modifying the surface of graphene.

Preferably, the receptor element in the system according to the invention is any biomolecule specific for a particular analyte. Particularly preferably, the biomolecule is selected from enzymes, immunoproteins, antigens, non-immunological proteins, immunoglobulin binding proteins, sugar-binding proteins, fatty acids and fatty acid esters, ligands, aptamers, polypeptides or oligopeptides capable of forming a ligand binding. Even more preferably, the receptor element is an enzyme. The most preferred receptor element is an oxidoreductase enzyme, such as an oxidase or a dehydrogenase enzyme, in particular selected from the group consisting of glucose oxidase, alcohol oxidase, lactate oxidase and glucose dehydrogenase.

The present invention also relates to a biosensor comprising a carbon nanostructure system according to the invention immobilized on a conductive substrate (support) capable of further transmitting a signal, preferably an electrical signal. According to a preferred embodiment, the substrate is a carbon substrate, in particular a substrate selected from glassy carbon and graphite. Equally preferably, the conducting substrate is a metallic substrate, in particular a gold, platinum or palladium substrate.

The invention also relates to a method for the determination of an analyte in a sample, which method comprises the steps of:

- contacting the biosensor according to the invention with a sample containing the determined analyte, and
- monitoring of changes in the electrical characteristics of the system.

According to a preferred embodiment of the method according to the invention, the change in the electrical characteristics of the system over time indicates the presence of the determined analyte in the sample. Preferably, the change in the electrical characteristics of the system is selected from changes in the conductance of the system, system resistance, system inductance, or changes in potential of the resistance, system inductance, or changes in potential of the system, preferably from a change in system conductance or system resistance.

According to a preferred embodiment of the method according to the invention, the sample is a liquid sample.

In another, equally preferred embodiment of the method according to the invention, the sample is a gaseous sample.

In a further preferred embodiment of the invention, the analyte is a molecule capable of both oxidation and reduction, and preferably a molecule capable of oxidation.

The present invention also relates to the use of a 4-(pyrrol-1-yl)benzoic acid derivative, preferably the 4-(2-formyl-1H-pyrrol-1-yl)benzoic acid derivative for the modification of the graphene matrix surface, with exposed, unbonded carboxyl groups capable of forming an amide bond, to form a covalent bond between the nanostructured carbon matrix and the pyrrole benzoic acid derivative forming the structure of formula A or B described above. In certain practical embodiments of the present invention, the graphene-based matrix is graphene. In particularly preferred embodiments, the graphene is chemically reduced graphene. In another, equally preferred embodiment of the invention, the graphene matrix is graphene oxide. In yet another preferred embodiment, the graphene matrix is a combination of graphene and graphene oxide.

Another subject of the present invention is the use of a biosensor according to the invention as an electrode in a biofuel cell. Preferably, the electrode in the biofuel cell is a negative electrode, an anode. In yet another preferred embodiment, the electrode in the fuel cell is a positive electrode, a cathode. In yet another embodiment, at least one electrode in the biofuel cell is two electrodes, anode and cathode.

## Definitions

The definitions of terms as used in the present description are set out below. In a situation of conflict with the meanings found in the literature on the subject, the meanings indicated in this description have priority. The method, process and way used conventionally have equivalent meanings.

The term "a $C_{1-6}$ alkyl group" means a straight or branched carbon radical containing 1 to 6 carbon atoms, some preferred embodiments refer to a $C_{1-3}$ alkyl group containing 1 to 3 carbon atoms, and other particularly preferred embodiments of the $C_{1-2}$ alkyl group containing 1 or 2 carbon atoms. Examples of the alkyl group include methyl, ethyl, n-propyl, isopropyl, n-butyl, sec-butyl, t-butyl, amyl, t-amyl, n-pentyl group and the like, with the methyl, ethyl, n-propyl, isopropyl, n-butyl, sec-butyl, t-butyl group being particularly useful.

Thus, the term "$C_1$-$C_3$ alkylene group" refers to a divalent, straight carbon group such as $-CH_2-$, $-CH_2CH_2-$, $-CH_2CH_2CH_2-$.

The term "$C_2$-$C_6$ alkenyl group" means a monovalent group of a straight or branched chain containing from 2 to 6 carbon atoms having at least one double bond.

The term "$C_2$-$_6$ alkynyl group" means a radical containing 2 to 6 carbon atoms and at least one carbon-carbon triple bond, some embodiments have 2 to 4 carbon atoms, some embodiments have 2 to 3 carbon atoms, and some embodiments have 2 carbon atoms. Examples of the alkynyl group include ethynyl, 1-propynyl, 2-propynyl, 1-butynyl, 2-butynyl, 3-butynyl, 1-pentynyl, 2-pentynyl, 3-pentynyl , 4-pentynyl, 1-hexynyl, 2-hexynyl, 3-hexynyl, 4-hexynyl, 5-hexynyl group and the like. The term "alkynyl" includes di- and tri-yne.

The term "amino group" means a -$NH_2$ group.

The term "$C_{1-4}$ alkylamino group" means one alkyl radical attached to an amino radical, wherein the alkyl radical has the same meaning as described above. Some examples include methylamino, ethylamino, propylamino group and the like.

The term "aryl group" means an aromatic ring radical containing 6 to 10 ring carbon atoms. Examples include a phenyl group and a naphthyl group.

The term "aralkyl group" means a $C_1$-$C_4$ alkylene group such as -$CH_2$-, -$CH_2CH_2$- and the like, which is further substituted by an aryl group. Examples of the "aralkyl group" include a benzyl group, a phenethylen group and the like.

The term "benzyl group" means a -$CH_2C_6H_5$ group.

The term "carboxamide group" refers to a group -$CONH_2$.

The term "carboxy" or "carboxyl group" means a -$CO_2H$ group also referred to as a carboxylic acid group.

The term "$C_3$-$_6$ cycloalkyl group" denotes a saturated ring radical containing 3 to 6 carbon atoms; some embodiments contain 3 to 5 carbon atoms; some embodiments contain 3 to 4 carbon atoms. Examples include cyclopropyl, cyclobutyl, cyclopentyl, cyclohexyl group, and the like.

Analogously, the term "$C_3$-$_6$ cycloalkenyl group" means a non-aromatic ring radical containing 3 to 6 ring carbon atoms and at least one double bond; some embodiments contain 3 to 5 carbon atoms; some embodiments contain 3 to 4 carbon atoms. Examples include cyclopropenyl, cyclobutenyl, cyclopentenyl, cyclopentenyl, cyclohexenyl group, and the like.

The term "halogen atom" or "halogen" means a radical that is a fluorine, chlorine, bromine or iodine atom.

The term "$C_1$-$_6$ haloalkyl group" and "$C_1$-$_3$ haloalkyl group" means an alkyl group, as defined herein, wherein the alkyl group is substituted with one halogen atom up to the fully substituted alkyl group represented by the formula $C_nF_{2n+1}$; when more than one halogen is present, they may be the same or different and are selected from the above-mentioned F, Cl, Br or I atoms. Some embodiments, as in the case of the alkyl group, have 1 to 3 carbon atoms. Examples include fluoromethyl, difluoromethyl, trifluoromethyl, chlorodiflucromethyl, 2,2,2-trifluoroethyl, pentafluoroethyl group and the like.

The term "thiol group" means a -SH group.

The term "$C_1$-$_4$ haloalkylthio group" means an alkylthio radical substituted with one or more halogen atoms. Examples include trifluoromethylthio, 1,1-difluoroethylthio, 2,2,2-trifluoroethiol group and the like.

The term "$C_1$-$_4$ alkylthio group" means an alkyl radical attached to a sulfide of formula: -S-, wherein the alkyl radical has the same definition as described herein. Examples include a methylsulfanyl (i.e., $CH_3S$-), ethylsulfanyl, isopropylsulfanyl group and the like.

The term "$C_1$-$_6$ alkylalkoxy group" means a group -OR, wherein R is an alkyl group as defined above. The representative examples include such groups as methoxy, ethoxy, 1-methoxyprop-1-en-3-yl, propoxy, isopropoxy, cyclopropyloxy, cyclohexyloxy and the like.

According to the present invention, the graphene matrix is a graphene substrate (support) containing a mixture of graphene flat structures, most often in the form of flakes (sheets), with a stack structure consisting of several graphene layers, wherein graphene structures may include both graphene and its oxidized form - graphene oxide , or their combinations. According to the present description, a graphene matrix containing a graphene-based graphene substrate, in particular chemically obtained graphene, is particularly useful. According to the present description, chemically obtained graphene is any graphene obtained as the result of the chemical synthesis, in particular as a result of chemical exfoliation from graphite or chemical reduction reaction of graphene oxide, or deposition on silicon carbide.

In the present description, the term receptor element means any individual capable of specifically recognizing specific chemical molecules. In particular, the receptor element may be a biomolecule found in biological systems. Particularly useful proteins are proteins, nucleic acids, microorganisms and low molecular organic compounds. Examples of such useful biomolecules that may function as a receptor element in accordance with the present invention include, but are not limited to, enzymes, immunoproteins, antigens, non-immunological proteins, immunoglobulin binding proteins, sugar binding proteins, fatty acids and fatty acid esters, ligands, aptamers, polypeptides or oligopeptides capable of forming a ligand binding.

According to the present invention, a biosensor is a device that utilizes specific biochemical reactions mediated by a receptor selected from the group consisting of isolated enzymes, microorganisms, immunosystems, tissues, organelles, whole cells, antibodies, nucleic acids and combinations thereof to detect in the medium the presence of specific chemical compounds or combinations of chemical compounds, also referred to herein as the general term of analytes, usually due to specific electrical, thermal or optical agents. Within the biological sensor, the receptor is coupled to the

transducer by immobilizing agents.

According to the present invention, the analyte can be any biological, including biochemical or biological or chemical analyte, including, in particular, various groups of organic molecules, molecules containing metals, ions or inorganic molecules, or combinations thereof. The analyte may also be an inorganic molecule, including a molecule in gaseous form, such as oxygen or carbon dioxide. Biological substrates, in particular biomolecules found in biological systems, are considered to be particularly useful analytes. Such an analyte often has the function of fuel, in particular biofuel, in a fuel cell, in particular a biofuel cell and analytical biosensors. In the case of the occurring electrode reaction, in which the analyte participates, it acts as a substrate for such a reaction.

According to the present description, "chemically-obtainable" means possible to obtain (obtainable) by the treatment of chemical compounds without the participation of other preparation methods such as, for example, electrochemical methods, in particular by chemical reaction or, in the case of chemically-obtainable graphene by exfoliation.

**Problems solved by the invention**

As indicated above, the present inventors have also recognized the need to provide an universal matrix that is applicable in sensors, especially in biosensors, which, providing high conductivity, would guarantee a high sensitivity of determination and hence a desirable accuracy of determination. The matrix should be sufficiently durable to allow the use of systems based on such a matrix for a long time, and the results should be reproducible. The matrix developed by the inventors of the present invention has all the desirable characteristics indicated above. In addition, which has also been indicated above, it is easy to prepare and relatively cheap.

**Description of practical implementation examples of the invention**

The present invention is illustrated in more detail below in examples of its practical implementation, which are illustrated in the Figure, in which

**FIG. 1** shows a scheme of a modified graphene matrix according to the invention.

**FIG. 2** shows the spectrum of the C1s region recorded for graphene modified with the pyrrole benzoic acid derivative according to the invention.

**FIG. 3** shows the spectrum of the N1s region recorded for graphene modified with the pyrrole benzoic acid derivative according to the invention.

**FIG. 4** shows the thermogravimetric curve recorded for graphene modified with the pyrrole benzoic acid derivative according to the invention.

**FIG. 5** shows the SEM image of graphene matrix (deposited on glassy carbon plate)

**FIG. 6** shows the SEM image of modified graphene matrix (deposited on glassy carbon plate) with immobilized glucose oxidase.

**FIG. 7** shows the dependence of glucose oxidase activity immobilized in a graphene matrix measured by the increase of current density A) from the change of applied voltage, B) over time (in time), in the presence of glucose and oxygen in 0.1 M phosphate buffer solution at pH 7.0 and C) scheme of the bioelectrocatalytic layer, composed of a graphene matrix and glucose oxidase enzyme, deposited on a glassy carbon electrode.

**FIG. 8** shows the dependence of lactate oxidase activity immobilized in a graphene matrix measured by the increase of current density A) from the change of applied voltage, B) over time (in time), in the presence of lactate and oxygen in 0.1 M phosphate buffer solution at pH 7.0.

**FIG. 9** shows the dependence of alcohol oxidase activity immobilized in a graphene matrix measured by the increase of current density A) from the change of applied voltage, B) over time (in time), in the presence of alcohol and oxygen, C) over time (in time), in the presence of methanol and oxygen D) during 33 days in 0.1 M phosphate buffer solution at pH 7.0.

**FIG. 10** shows the SEM image of modified graphene matrix (deposited on glassy carbon plate) with immobilized lactate oxidase.

**FIG. 11** shows the dependence of NADH activity A) at the glassy carbon electrode, B) in the GR/fPyBA-GDH layer (film) and the activity of glucose dehydrogenase immobilized in a graphene matrix measured by the increase of current density C) versus the change of applied voltage, with increasing of glucose concentration D) over time (in time), in the presence of glucose and $NAD^+$ in 0.1 M phosphate buffer solution at pH 8.0.

**FIG. 12** shows the dependence of glucose dehydrogenase activity immobilized in a graphene matrix measured by the decrease of current density over time, in the presence of glucose in 0.1 M phosphate buffer solution at pH 8.0.

**FIG. 13** shows chronovoltammetric curves recorded for layers a) GR/fPyBA-GOx, d) GR/fPyBA-LOx, g) GR/fPyBA-AOx, respectively (deposited on the glassy carbon electrode) at different scan rates (from 1 to 900 $mV \cdot s^{-1}$); the dependence of anodic ja and cathodic jc peak current density from the scan rate for layers (films) b) GR/fPyBA-GOx, e) GR/fPyBA-LOx, h) GR/fPyBA-AOx and the dependence of anodic Ea and cathodic Ec peak potential from the logarithm of scan rate for layers (films) c) GR/fPyBA-GOx, f) GR/fPyBA-LOx, i) GR/fPyBA-AOx; supporting electrolyte: deoxygenated 0,1 mol•$dm^{-3}$ phosphate buffer solution at pH 7.0.

**FIG. 14** shows amperometric dependences of current density from time recorded for layers (films) A) GR/fPyBA-GOx, B) GR/fPyBA-LOx C) GR/fPyBA-AOx, respectively, (deposited on glassy carbon electrodes) during the successive addition of A) 0.5 mmol•$dm^{-3}$ glucose solution, B) 0,25 mmol•$dm^{-3}$ lactate solution, C) 0.5 mmol•$dm^{-3}$ ethanol solution, with the addition of interferents that interfere with the analytical signal: 0,1 mmol•$dm^{-3}$ uric acid (UA), 0.1 mmol•$dm^{-3}$ ascorbic acid (AA) oraz 0.1 mmol•$dm^{-3}$ dopamine (DA), recorded at the potential E=-0,4 V; supporting electrolyte: oxygenated 0,1 mol•$dm^{-3}$ phosphate buffer solution at pH=7,0.

**FIG. 15** shows the general scheme of bioelectrocatalytic layer, composed of the graphene matrix and enzyme (biocatalyst), deposited on the glassy carbon electrode.

However, it should be borne in mind that the embodiments set forth herein are for illustrative purposes only and are not intended to limit the scope of the invention in any way.

**Examples of practical implementation of the invention Reagents**

During the production of the graphene matrix, the following reagents were used as commercially available, without further processing, including without purification:

- N-methyl-2-pirrolidone (NMP) 99%, Alfa Aesar
- Graphite powder <20μm, Sigma-Aldrich
- Sarcosine (N-methylglycine) 98%, Sigma-Aldrich
- 4-(2-formylo-1H-pirolo) benzoic acid CPR, Sigma-Aldrich
- Methanol 99.8%, Polish Chemical Reagents, POCH
- Ethanol 99.8%, Polish Chemical Reagents, POCH.

**Equipment (Apparatus)**

The apparatus shown below was used in the studies discussed in the present Example.

- X-ray Photoelectron Spectroscopy XPS measurements were recorded using the spectrometer ESCALAB-210 (VG Scientific) equipped with a source Al-Kα (1486.6 eV), the results were normalized to the carbon peak with binding energy C1s = 284.6 eV.
- Thermogravimetric measurements were carried out using a thermal analyzer Q50 TGA (TA Instruments).
- UV-Vis absorption measurements were carried out with Cary 50-UV-Vis (Agilent Technologies).
- During the synthesis, the ultrasonic bath SONIC-0.5 (POLSONIC Sp. J.), frequency 40kHz, power 80W was used.

**Example 1**

**Preparation (synthesis) of graphene matrix**

**Graphite exfoliation**

Graphite exfoliation was carried out according to the description provided by Hernandez, Y. et al. in the publication "High-yield production of graphene by liquid-phase exfoliation of graphite.", Nat. Nanotechnol., 2008, 3 (9), 563-568.

Briefly, 500 ml of N-methyl-2-pyrrolidone and 50 mg of graphite were introduced into a 1000 ml round bottom flask, and the resulting suspension was sonicated for 30 minutes. The resulting dispersion was centrifuged at 500 rpm for 90 minutes. Using a pipette, the top part of the solution was decanted half the volume from the obtained sediment.

**Preparation of graphene modified with a pyrrole benzoic acid derivative**

Graphene modified with a pyrrole benzoic acid derivative was prepared as described in Quintana, M. et al., "Functionalization of Graphene via 1,3-Dipolar Cycloaddition.", ACS Nano, 2010, 4 (6), 3527-3533 and Quintana, M .; et al., "Selective organic functionalization of graphene bulk or graphene edges.", Chem. Commun., 2011, 47 (33), 9330-9332. The use of 1,3-dipolar cycloaddition reaction for functionalization of some carbon surfaces is known from prior art. For example 1,3-dipolar cycloaddition protocol for modification of reduced graphene oxide (RFO) surface via

the "Prato reaction" is described in publication of Wang, A. et al., "A 1,3-dipolar cycloaddition protocol to porphyrin-functionalized reduced graphene oxide with push-pull motif". Applicability of "Prato reaction" with sarcosine for covalently bonding of material to the fullerene surface is described in publication WO 96/36631. Similarly, "Prato reaction" with sarcosine to covalently linked material to multi-wall carbon nano-tubes in CN 105 348 291. Nevertheless, all of this publications are silent about using pyrrole benzoic acid derivative for any carbon matrix functionalization. Since none of the disclosures suggests the graphene matrix modified by covalently bound pyrrole benzoic acid derivative, as well the method of graphene matrix functionalization by such a covalently bound pyrrole benzoic acid derivative present inventors proposed such new protocol as shortly described below.

Briefly, 250 ml of exfoliated graphene (UV-Vis content of: 0.02 mg/ml, 0.42 mmol), 90 mg of 4-(2-Formyl-1H-pyrrol-1-yl)benzoic acid (0.42 mmol, 1eq of graphene) and 37 mg of sarcosine (0.42 mmol, 1eq of graphene carbon) were placed in a 500 ml round bottom flask fitted with a magnetic stirrer. The solution was stirred for 72 hours at 125°C, introducing additional portions of aldehyde and sarcosine after 24 hours and 48 hours, consecutively. The mixture was then filtered using a syringe filter with a polyvinylidene difluoride (PVDF) membrane having a porosity of 0.45 μm. The obtained solid was washed with methanol (5 x 10 ml.) Next, to recover graphene from the filter membrane surface, it was dispersed by ultrasonication in ethanol (20 ml, 15-20 minutes). And then the resulting suspension was centrifuged at 15,000 rpm for 30 minutes. The resulting solid was dried in a vacuum oven at 40 ° C for 16 hours to a constant weight. The obtained by the 1,3-dipolar cycloaddition product was then dispersed in tetrahydrofuran (Figure 1). (1 mg GR/fPyBA was dispersed in 1 ml of THF solution - sonicated by 2 h). The scheme obtained by the method described above is shown in Fig. 1.

### X-ray Photoelectron Spectroscopy (XPS)

As indicated above, the XPS spectra were recorded using an ESCALAB-210 spectrometer (VG Scientific) equipped with an A1-Kα source (1486.6 eV). Obtained results were normalized to the carbon peak with C1s binding energy = 284.6 eV. Samples of graphene modified with pyrrole benzoic acid showed the presence of four elements: carbon, nitrogen, oxygen and silicon.

The C1s photoelectron spectrum signal (Fig. 2) was deconvoluted and very well correlated into six components: 284.6 eV, 285.2 eV, 285.9 eV, 287.1 eV, 289.8 eV and 291.2 eV, derived from the carbon atoms C=C, C-C, C-N/C-O, C=O, -COO, and the π-π* transition, typical for organic compounds with multiple bonds according to the publication cf Liu, HL et al. "Layered graphene nanostructures functionalized with NH2-rich polyelectrolytes through self-assembly: Cu (II) detection.", J. Mater. Chem. B, 2014, 2 (16), 2212-2219 and Some, S. et al., "High-Quality Reduced Graphene Oxide by a Dual-Function Chemical Reduction and Healing Process.", Sci Rep-Uk, 2013, 3.

The obtained results confirm obtaining the expected ordered structure of functionalized graphene, which indicates the presence of carboxyl groups on its surface, as well as linkages (couplings) containing nitrogen atoms. The assignment of specific structures to nitrogen containing bonds allowed further detailed analysis of the N1s spectrum (Fig. 3). N1s photoelectrons have been registered as a signal composed of two components with maxima located at 399.8 and 400.8 eV, these values allow to assign them to the nitrogen atoms of the pyrrolidine ring and pyrrole ring, respectively, clearly confirming the presence of N-methylpyrrolidine rings substituted with pyrrole benzoic acid. The obtained ratio of pyrrolidine and pyrrole nitrogen signals, ranging from 51.7 to 49.3, is very similar to that expected for our 1:1 structure.

### Thermogravimetric analysis

The analysis of the graphene surface in terms of the content of pyrrolidine rings substituted with pyrrole benzoic acid was the subject of thermogravimetric (TG) studies. The thermogram was recorded under a nitrogen atmosphere at a linear heating rate of 5°C/min. The obtained dependence is depicted in Fig. 4.

The observed mass change in the temperature range 50-190°C as shown in Fig. 4 should be linked to the presence of residual organic solvents used during graphene synthesis. On the other hand, the main loss of mass, consisting of two processes in the range of 190-600°C, constituting 11.2% of the residue after evaporation of solvents, originates from α-substituted N-methylpyrrolidine rings introduced onto the graphene surface. The obtained result allows to estimate that the degree of functionalization is about 1 functional group per 160 carbon atoms.

The obtained results clearly confirm that the graphene matrix according to the invention is extremely stable, at a similar or higher level as compared to those observed for analogous materials.

The surface morphology research of the obtained matrix was carried out using a scanning electron microscope (Fig. 5). These studies showed that the obtained surface is not homogeneous. However, the three-dimensional structure, composed of "crushed" graphene flakes (sheets), appears to be a well-conducting matrix capable of immobilizing biomolecules on such surface, in particular proteins (enzymes) (Fig. 5).

**Example 2 Preparation of systems comprising graphene modified with a pyrrole benzoic acid derivative and enzymes from the family of oxidoreductases**

**Reagents**

During the production of systems comprising chemically obtained graphene modified with the pyrrole benzoic acid derivative, the following reagents were used as commercially available, without further processing, including without purification:

- glucose oxidase (Aspergillus niger) (GOx), 201 U/mg, Fluka, Switzerland,
- lactate oxidase (LOx) 41 U/mg, Sigma, USA,
- alcohol oxidase (*Hansenula* sp.) (AOx)5.8 U/mg, Sigma, USA,
- glucose dehydrogenase (*Pseudomonas* sp.)(GDH) 256.8 U/mg, Sigma, USA,
- bovine serum albumin (BSA), Sigma, USA,
- Nafion®, 5% solution in a mixture of aliphatic alcohols and water, 15-20% $H_2O$, Aldrich, USA,
- glutaraldehyde (GA) $C_5H_8O_2$, 50%, Aldrich, USA,
- glucose $C_6H_{12}O_6$, analytical grade, Polish Chemical Reagents,(POCh), Poland,
- sodium lactate ($C_3H_5O_3Na$), Sigma-Aldrich, USA
- ethanol 99.8%, analytical grade, Polish Chemical Reagents,(POCh), Poland,
- methanol 99.8%, analytical grade, Polish Chemical Reagents,(POCh), Poland,
- dipotassium hydrogen phosphate $K_2HPO_4$, analytical grade, Polish Chemical Reagents,(POCh), Poland,
- potassium dihydrogen phosphate $KH_2PO_4$, analytical grade, Polish Chemical Reagents,(POCh), Poland,
- dopamine hydrochloride (DA), Sigma, USA,
- ascorbic acid (AA), Sigma, USA,
- uric acid (UA), Sigma, USA,
- nicotinamide adenine dinucleotide ($NAD^+$), Sigma-Aldrich, USA,
- highly purified argon (99.999%) for the deoxygenation of solutions,
- highly purified medical oxygen (99.999%) for oxygenating solutions.

**Apparatus utilized in the research**

The apparatus shown below was used in the studies discussed in the present Example.

- CHI 660B, 760E, 1030C Electrochemical Workstation, CH Instruments, Inc. Austin, Texas, USA,
- working electrode - disk glassy carbon electrode with a diameter of 3 mm (area 0.07 $cm^2$), CHI, Chemical Instruments Inc., Austin, Texas, USA,
- platinum auxiliary electrode - platinum wire with a diameter of approx. 0.08 mm, CH Instruments, Inc. Austin, Texas, USA,
- silver chloride reference electrode - Ag/AgCl/1M KCl, CH Instruments, Inc. Austin, Texas, USA,
- Scanning electron microscope, MERLIN, Zeiss, Germany,
- Transmission electron microscope, LIBRA 120, Zeiss, Germany.

**Example 2a - Preparation of the system comprising graphene modified with a pyrrole benzoic acid derivative (GR/fPyBA) and glucose oxidase (GOx).**

The working electrode, made of glassy carbon, was cleaned on polishing cloth using aluminum oxide (0.5 $\mu m$ and 0.05 $\mu m$). Then, the electrode was placed in a phosphate buffer solution pH=7.0 and the potential of 1.7 volts was applied thereto for 180 seconds. 5 $\mu l$ of the graphene solution modified with the pyrrole benzoic acid derivative (GR/fPyBA) was dropped to the electrode surface.

The biocatalyst was prepared as the layer was drying. It was proceeded this way each time before the enzyme was applied to the graphene matrix.

1.5 mg glucose oxidase (GOx) was weighed on the analytical balance. Then, 12.5 $\mu l$ of 0.1 mol•$dm^{-3}$ phosphate buffer solution pH=7.0 and 0.9 $\mu l$ of 5% glutaraldehyde were added thereto. Subsequently, 7 $\mu l$ of the enzyme solution was applied to the previously prepared layer. After about 15-20 minutes, when the layer was already dry, it was submerged in a 0.5% Nafion solution and allowed to dry again.

To confirm the effectiveness of protein immobilization (GOx) on the surface of the graphene matrix by means of scanning electron microscopy, an image of the graphene matrix surface was recorded with the immobilized enzyme ((Fig. 6).

Then, a working electrode, a silver-chloride electrode as the reference electrode and a platinum wire performing the function of the auxiliary electrode are placed in a 25 ml measuring cell filled with 0.1 M phosphate buffer solution pH=7.0. Measurements of bioelectrocatalytic activity were carried out both under anaerobic conditions (in the presence of argon) and aerobic (medical oxygen) with additives being a determined analyte of the substrate - glucose utilizing cyclic chronovoltammetry and amperometry using the CH Instruments Model 660B potentiostat (Fig. 7).

In the conducted studies, it was shown that the GR/fPyBA-GOx layer shows the activity towards oxygen reduction. As shown in Fig. 7A, an increase in the current density values of the oxygen reduction dissolved in the solution was observed.

Next, voltammetric curves were recorded in an oxygenated 0.1 M phosphate buffer solution, to which a glucose solution was added in portions so that its concentration varied from 0.5 to 2.5 mM with a change of 0.5 mM. It was observed that with the increase in the glucose concentration the intensities of cathodic current densities decreased but the anodic ones increased, which was related to the decreasing oxygen concentration in the system, which was consumed in a catalytic reaction involving glucose oxidase immobilized in the layer according to the following equations 1-3:

$$GOx(FADH_2) + O_2 \rightarrow GOx(FAD) + H_2O_2 \quad \text{Equation 1}$$

$$GOx\ (FAD) + 2H^+ + 2e^- \rightarrow GOx\ (FADH_2)\ \text{(on the electrode)} \quad \text{Equation 2}$$

$$\text{glucose} + GOx(FAD) \rightarrow \text{gluconolactone} + GOx(FACH_2) \quad \text{Equation 3}$$

The research results shows that the presence of a graphene matrix with a covalently immobilized pyrrole benzoic acid derivative, due to the mediating nature of the electro-conductive system, significantly improves the electron transport (high heterogeneous electron transfer rate constant, ks = 25.0 $s^{-1}$), thus significantly improves the catalytic activity of the immobilized protein.

To determine the enzymatic kinetics of the described above systems, the amperometric method was used (Fig. 7B). The magnitude of the current density was recorded during the successive addition of 0.25 mM glucose solution, with a constant potential of -0.4 V. Each addition of glucose caused an increase in current density, which confirmed high sensitivity of the system to changes in its concentration (S=6,6 $\mu$A $mM^{-1}$ $cm^{-2}$).

Next, on the basis of the amperometric measurement, the calibration curves of dependence of the stationary current density from the glucose concentration were determined and the parameters of the glucose biosensor were calculated, i.e. Michaelis-Menten constant ($K_M$=11.2 mM), detection limit (LOD=65 $\mu$M), linearity range (LR=0.25-3.0 mM). The obtained system is very stable. A slight decrease in the biosensor activity was observed in the oxidation of glucose of about 8.8% during 33 days (Fig. 9D). The lifetime of the immobilized protein is about 6 months. Thus, it has been shown that the matrices according to the invention, and thus the systems based on such matrices are capable of selectively detecting glucose without affecting current interferents such as dopamine, uric acid, ascorbic acid (Fig. 14A).

**Example 2b** - **Preparation of the system comprising graphene modified with a pyrrole benzoic acid derivative (GR/fPyBA) and lactate oxidase (LOx).**

To a freshly opened bottle containing lactate oxidase, 105 $\mu$l of 0.1 mol•$dm^{-3}$ phosphate buffer solution at pH=7.0 were added. The solution was then pipetted into ten vials (eppendorf tubes), each containing 10 $\mu$l. Vials that were not used in the study were frozen.

Then, 0.6 mg of bovine albumin was added to 10 $\mu$l of lactate oxidase solution (LOx) followed by 0.7 $\mu$l of 5% glutaraldehyde. A 7 $\mu$l enzyme solution was applied to the previously prepared graphene matrix layer. After about 15-20 minutes, when the layer was already dry, it was submerged into the 0.5% Nafion solution and allowed to dry again.

Then, a working electrode, a silver chloride electrode as the reference electrode and a platinum wire performing the function of the auxiliary electrode are placed in a 25 ml measuring cell filled with 0.1 M phosphate buffer solution pH=7.0. Measurements of the bioelectrocatalytic activity were carried out both under anaerobic conditions (in the presence of argon) and aerobic (medical oxygen) with additives being a determined analyte of the substrate - sodium lactate utilizing cyclic chronovoltammetry and amperometry using the CH Instruments Model 760E potentiostat. It has been shown that the layer shows the activity towards oxygen reduction. An increase in the current density values of the oxygen reduction dissolved in the solution was observed. Next, voltammetric curves were recorded in an oxygenated 0.1 M phosphate buffer solution, to which the sodium lactate solution was added in portions so that its concentration varied from 0.1 to 1.0 mM in 0.1 mM increments. It was observed that with the increase in lactate concentration, the intensity of the cathode current densities decreased and the anode ones increased, which was associated with the decreasing oxygen concentration, which was consumed in a catalytic reaction with lactate oxidase immobilized in layers according to equations 4-6:

$$LOx\ (FMN_2) + O_2 \rightarrow LOx\ (FMN) + H_2O_2 \qquad \text{Equation 4}$$

$$LOx\ (FMN) + 2H^+ + 2e^- \rightarrow LOx\ (FMN_2)\ \text{(on the electrode)} \qquad \text{Equation 5}$$

$$\text{lactate} + LOx\ (FMN) \rightarrow \text{pyruvate} + LOx\ (FMN_2) \qquad \text{Equation 6}$$

It results from the conducted research (Fig. 8A) that the presence of the graphene matrix according to the invention with the covalently immobilized pyrrole benzoic acid, due to the mediating nature of the electro-conductive system significantly improves the electron transport (high heterogeneous electron transfer rate constant, $k_s$ = 18.8 $s^{-1}$), which significantly improves the catalytic activity of the immobilized protein. To study the enzymatic kinetics of the described above systems, the amperometric method was used (Fig. 8B). The magnitude of the current density during the successive addition of a 0.05 mM lactate solution at -0.4 V. After each addition of the lactate solution, an increase in the current density was observed, which confirmed high sensitivity (S=56.5 $\mu$A $mM^{-1}$ $cm^{-2}$) of the system for changes in its concentration.

Subsequently, on the basis of the amperometric measurement, calibration curves for the intensity of the stationary current density versus the lactate concentration were determined and the lactate biosensor parameters were calculated, i.e. Michaelis-Menten constant ($K_M$=0.75 mM), detection limit (LOD=23 $\mu$M) , linearity range (LR=0.05-0.55 mM). The obtained system is very stable. A slight decrease in the biosensor activity was observed in the lactate oxidation of about 10.7% during 33 days (Fig. 9D). The lifetime of the immobilized protein is about 7 months. It has also been demonstrated that these systems are capable of selectively detecting lactates without the influence of current interferents, such as dopamine, uric acid, ascorbic acid (Fig.14B) .

Similarly, as in the case of GOx, in the case of the GR/fPyBA-LOx layer, crushed graphene fragments coated with protein molecules in the recorded SEM image (Fig. 10) are visible. These studies have confirmed the effectiveness of the method of immobilization of the enzyme in the nanostructured layer.

**Example 2c** - **Preparation of the system comprising graphene modified with a pyrrole benzoic acid derivative (GR/fPyBA) and alcohol oxidase (AOx).**

1.75 mg of alcohol oxidase (AOx) and 0.75 mg of bovine serum albumin (BSA) were weighed on the analytical balance. Then, 12.5 $\mu$l of 0.1 mol•$dm^{-3}$ phosphate buffer solution pH 7.0 and 0.9 $\mu$l of 5% glutaraldehyde were added to the mixture. Subsequently, 7 $\mu$l of enzyme solution was applied to the previously prepared GR/fPyBA layer. After about 15-20 minutes, when the layer was already dry, it was submerged into 0.5% Nafion solution and allowed to dry again. All measurements were performed in a phosphate buffer solution pH=7.0. Then, a working electrode, a silver chloride electrode as the reference electrode and a platinum wire performing the function of the auxiliary electrode were placed in a 25 ml measuring cell filled with 0.1 M phosphate buffer solution pH=7.0. Measurements of the bioelectrocatalytic activity were carried out under anaerobic conditions (in the presence of argon) and aerobic (medical oxygen) with additions of substrate - ethanol by cyclic voltammetry and amperometry using CH Instruments Model 660B potentiostat.

It was shown, in these studies, that the layer exhibits activity towards oxygen reduction. The increase in the value of the current densities of oxygen reduction dissolved in the solution was observed.

Next, voltammetric curves were recorded in an oxygenated 0.1 M phosphate buffer solution, to which ethanol solution was added in portions so that its concentration varied from 0.5 to 4.5 mM in 0.5 mM increments. It was also observed that with the increase of ethanol concentration, the intensities of cathodic current densities diminished, and anodic ones increased, which was associated with the decreasing oxygen concentration, which was consumed in a catalytic reaction involving alcohol oxidase immobilized in layers according to equations 7-9:

$$AOx(FADH_2) + O_2 \rightarrow AOx(FAD) + H_2O_2 \qquad \text{Equation 7}$$

$$AOx\ (FAD) + 2H^+ + 2e^- \rightarrow AOx\ (FADH_2)\ \text{(on the electrode)} \qquad \text{Equation 8}$$

$$\text{ethanol} + AOx(FAD) \rightarrow \text{acetaldehyde} + AOx(FADH_2) \qquad \text{Equation 9}$$

It results from the conducted research (Fig. 9A) that the presence of a graphene matrix with covalently immobilized pyrrole benzoic acid, due to the mediating nature of the electro-conductive system, facilitates electron transport (high heterogeneous electron transfer rate constant, $k_s$ = 23.2 $s^{-1}$), thus significantly improves the catalytic activity of the immobilized protein.

To study the enzymatic kinetics of the described above systems, the amperometric method was used (Fig. 9B, C). For this purpose, the current density values were recorded over time during the successive addition of a 0.5 mM

ethanol solution (Fig. 9B) and methanol (Fig. 9C) at a potential of - 0.4 V. After each addition of ethanol or methanol, an increase in the current density was noted confirming the high sensitivity of the system to changes in its concentration. On the basis of the amperometric measurement, calibration curves for the intensity of the stationary current density versus the from the ethanol/methanol concentration were determined and the ethanol/methanol biosensor parameters were calculated. The results are summarized in Table 1. The conducted studies have clearly confirmed that the obtained system is very stable. A slight decrease in the biosensor activity was observed in the oxidation of ethanol of approx. 20.4% during 33 days (Fig. 9D). It has also been demonstrated that these systems are capable of selectively detection of ethanol without the influence of present interferents, such as dopamine, uric acid, ascorbic acid (Fig.14C).

**Table 1.** Comparison of system parameters determined in oxygenated 0.1 M phosphate buffer solution pH=7.0.

| The studied system | $K_M$ [mM] | $j_{max}$ [$\mu$A cm$^{-2}$] | S [$\mu$A mM$^{-1}$ cm$^{-2}$] | $k_{cat}/K_M$ [M$^{-1}$ s$^{-1}$] | LR [mM] | LOD [$\mu$M] |
|---|---|---|---|---|---|---|
| **GR/fPyBA-AOx** ethanol | 4,7 | 43,4 | 9,23 | $1{,}38 \cdot 10^4$ | 0,5-2,5 | 184 |
| **GR/fPyBA-AOx methanol** | 2,09 | 33,6 | 16,1 | $3{,}10 \cdot 10^4$ | 0,5-1,5 | 276 |

**Example 2d** - **Preparation of the system comprising graphene modified with a pyrrole benzoic acid derivative (GR/fPyBA) and glucose dehydrogenase (GDH).**

0.6 mg of glucose dehydrogenase (GDH) was weighed on the analytical balance. Then, 12.5 $\mu$l of 0.1 mol•dm$^{-3}$ phosphate buffer solution pH=8.0 and 0.8 $\mu$l of 5% glutaraldehyde were added thereto. A 7 $\mu$l enzyme solution was applied to the previously prepared GR/fPyBA layer. After about 15-20 minutes, when the layer was already dry, it was submerged in a 0.5% Nafion solution and allowed to dry again. All measurements were made in phosphate buffer solution at pH 8.0, the concentration of $NAD^+$=5mM.

***Oxidation of NADH in the GR/fPyBA layer***

The use of dehydrogenases in biosensors and fuel cells requires the presence of nicotinamide cofactors, i.e. $NAD^+$ or $NADP^+$ in order to accept electrons from the substrate oxidation reaction that they catalyze. In order to obtain electrons from the enzymatic reaction, the NADH co-factor must be oxidized on the electrode, and the potential for oxidation becomes extremely important in the design of hybrid systems. While the redox potential for the redox $NAD^+$/NADH couple is relatively low at -0.56 V, the oxidation of NADH on a bare glassy carbon electrode occurs at high overpotential and may lead to the formation of nicotinamide dimers (Equation 10) that foul the electrode surface (Fig. 11A). To avoid this problem, the overpotential of NADH oxidation should be reduced, and this can be achieved by means of suitable matrices, i.e. carbon or metal nanostructures.

$$2\mathrm{NADH} \xrightarrow{-2e} 2\mathrm{NADH}^{\bullet +} \xrightarrow{-2H^+} 2\mathrm{NAD}^{\bullet} \rightarrow \mathrm{NAD}_2 \qquad \text{Equation 10}$$

To investigate the effect of the GR/fPyBA layer on the oxidation process of NADH to $NAD^+$, the voltammetric measurement was carried out (Fig. 11B). By analyzing the relationships shown in Fig. 11 A and B, an increase in the capacitive current density for the measurement on the electrode with the GR/fPyBA layer in relation to the measurement on the bare electrode can be seen. This is due to the fact that the GR/fPyBA graphene matrix increases the electroactive surface of the electrode. As a result, an increase in the catalytic oxygen density of NADH on the GR/fPyBA layer is also obtained.

In addition, the shift of the oxidation potential of NADH towards negative values for the GR/fPyBA layer in relation to the unmodified electrode was also observed. The potential difference is about 0.35 V. The reason for the potential shift may be, among other things, a reduction in the probability of a radical reaction in which NADH dimers are generated, contaminating (fouling) the surface of the electrode.

***Oxidation of glucose in the GR/fPyBA-GDH layer***

To test the biocatalytic activity of the layer under investigation, a number of voltammetric measurements were carried out at various glucose concentrations (1, 5, 10, 15, 20, 30, 40 mM). The measurements were performed in deoxygenated 0.1 M phosphate buffer solution pH 8.0 with the addition of 5 mM $NAD^+$, in the potential range from -0.2 V to 0.8 V at a scan rate of 5 mV s$^{-1}$. The first curve was registered for zero glucose concentration, and the next curve

was in the range from 1 mM to 40 mM (Fig. 11C).

It is noted that after each addition of glucose the anodic current density increases. From the analysis of recorded curves, considering the potential of NADH oxidation at the electrode with the GR/fPyBA layer, which was shifted towards more negative values, the reaction catalyzed by GDH runs towards the formation of gluconolactone and NADH (Equation 11), and the recorded analytical signal comes from the cofactor regeneration (Equation 12), which was used in the enzymatic reaction.

$$\text{glucose} + \text{NAD}^+ \xrightarrow{\text{GDH}} \text{gluconolactone} + \text{NADH} \qquad \text{Equation 11}$$

$$\text{NADH} \xrightarrow{\text{electrode}} \text{NAD}^+ + \text{H}^+ + 2\text{e}^- \qquad \text{Equation 12}$$

The kinetics of the studied system was examined in a chronoamperometric experiment by recording catalytic currents in time, after gradual and systematic addition of 0.25 mM glucose solution at a potential 0.7 V. An increase in catalytic current associated with a gradual increase of glucose concentration in the system was observed (Fig. 11D). The calibration curve, the dependence of the current density as a function of the glucose concentration, was plotted. At higher concentrations the graph reaches a plateau, which means that the current value becomes independent of the glucose concentration in the system and the enzyme is gradually saturated. High catalytic activity of the enzyme was found at various pH of 0.1 M phosphate buffer solution, however the best parameters were obtained in the solution with pH=8.0, as it was shown in Table 2.

**Table 2.** Comparison of system parameters determined in oxygenated 0.1 M phosphate buffer solution pH=8.0.

| The studied system | $K_M$ [mM] | $j_{max}$ [$\mu$A cm$^{-2}$] | S [$\mu$A mM$^{-1}$ cm$^{-2}$] | LR [mM] | LOD [$\mu$M] |
|---|---|---|---|---|---|
| **GR/fPyBA-GDH** | 20,7 | 644,4 | 31,1 | 0,25-4,5 | 218 |

The obtained system is very stable. A slight decrease in the biosensor activity towards glucose oxidation of about 12.1% was observed during 33 days (Figure 12).

**Example 3 - Determination and comparison of heterogeneous electron transfer rate constant ($k_s$) for systems according to the invention and systems known in the prior art**

To confirm the particular unexpected properties of the system according to the invention, the measurements were made to determine parameters of the electrode reaction, including the charge transfer rate, enabling a direct comparison of the systems according to the invention containing a biomolecule covalently bound to the modified graphene matrix according to the invention (GR/fPyBA-biomolecule) and with systems known from the prior art.

The measuring system, consisting of three electrodes: a working electrode (from the glassy carbon), an auxiliary electrode (platinum wire electrode) and a reference electrode (a silver chloride electrode) was thoroughly rinsed with distilled water. Then, the electrodes were placed in a measuring cell filled with 0.1 mol·dm$^{-3}$ phosphate buffer solution pH=7.0. Subsequently, the solution was deoxygenated with argon for 20 minutes, and then cyclic vcltammograms were recorded ranging from -0.6 to -0.3 V at various increasing scan rates from 1 to 2000 mV·s$^{-1}$ (Fig. 13, a, d, g). Two well-shaped peaks derived from the redox pair of enzyme co-factors were observed in accordance with equations 2, 5, 8, with formal potentials (for cyclic curves registered at 25 mV·s$^{-1}$) $E^0$=-0.451 mV, -0,470 mV, -0,438 mV for GR/fPyBA-GOx, GR/fPyBA-LOx, GR/fPyBA-AOx layers, respectively. At low scan rates the oxidation and reduction peaks were symmetrical and their peak to peak separation ($\Delta$E) was less than 29.5 mV (for GR/fPyBA-GOx, GR/fPyBA-LOx, GR/fPyBA-AOx layers to the scan rate 625, 256, 625 mV·s$^{-1}$, respectively. This was indicative of the reversible nature of the redox process. As the scan rate increased, the peak to peak separation values (the difference between the anodic and cathodic peak) increased and thus the reversible process was quasi-reversible, and then irreversible.

To determine the nature of the occurring process, it means to affirm whether the process is surface controlled or whether the diffusion controlled the dependence of current density vs. scan rate was plotted (Figures 13, b, e, h). The linear dependence in the case of the anodic and cathodic current density confirmed that both the oxidation and reduction of the cofactor are surface processes. If the nature of the processes taking place was diffusive, then the dependence of the current density vs. square root of the scan rate would be linear.

To determine the electron transfer rate constant, the dependence of peak potentials on the logarithm from the scan rate was plotted (Fig. 13, c, f, i). A linear dependence was observed in the plot when the assumption of $\Delta E > \frac{200}{n}$

was consistent with the Laviron theory. For rectilinear segments the equations of the straight line were determined, and then the corresponding slopes were read off. They were $-\frac{2.3RT}{\alpha nF}$ and $\frac{2.3RT}{(1-\alpha)}nF$ for the cathodic and anodic peak, respectively. On the basis of equation 13, the electron transfer coefficients α were determined, whose values were 0.64, 0.57, 0.69 for the layers: GR/fPyBA-GOx, GR/fPyBA-LOx, GR/fPyBA-AOx, respectively.

$$\log\frac{v_a}{v_c} = \log\left[\frac{\alpha}{(1-\alpha)}\right] \text{ lub } \frac{v_a}{v_c} = \frac{\alpha}{(1-\alpha)} \qquad \text{Equation 13}$$

where:

$v_a$ - the slope of the straight line for the anodic peak,
$v_c$ - the slope of the straight line for the cathodic peak,
α - electron transfer coefficient.

On the basis of the determined values of α and the equation 14, the electron transfer rate constants $k_s$ (given above in the Examples of the invention) and collected in Table 3 below) were determined. The high value of these constants indicates the high rate of redox processes in the graphene matrix.

$$\log k_s = \alpha\log(1-\alpha) + (1-\alpha)\log\alpha - \log\left(\frac{RT}{nFv}\right) - \frac{\alpha(1-\alpha)nF\Delta E}{2.3RT} \qquad \text{Equation 14}$$

For comparative purposes, different graphene matrices modified with different enzymes were also recorded using the amperometric method of the dependence of current density vs. time for the layers: A) GR/fPyBA-GOx, B) GR/fPyBA-GOx C) GR/fPyBA-AOx and summarized in Fig. 14 These data confirm that the modified graphene matrix according to the invention is an excellent matrix for binding various biomolecules and allowing the determination of changes in the concentration of various analytes.

The obtained kinetic parameters determined on the basis of the results obtained in the electrochemical measurements were compared with the data calculated for the systems known from the prior art in Table 3 below.

**Table 3.** Comparison of parameters of tested systems.

| **The studied system** | $K_M$ [mM] | $j_{max}$ [μA cm$^{-2}$] | S [μA cm$^{-2}$ mM$^{-1}$] | $k_{cat}/K_M$ [M$^{-1}$ s$^{-1}$] | $k_s$ [s$^{-1}$] | LR [mM] | LOD [μM] |
|---|---|---|---|---|---|---|---|
| CNT/PyBA-GOx$_{AG}$ | 10,2 | 273 | 28,0 | 5,85·10$^4$ | 3,2 | 0,5-3,5 | 72 |
| CNT/PyBA-GOx$_{EDC}$ | 14,7 | 293 | 20,0 | 4,54·10$^4$ | 0,4 | 0,25-3,25 | 36 |
| CNT/PyBA-AOx | 18,3 | 240 | 13,1 | 3,54·10$^3$ | 2,7 | 0,5-3,0 | 44 |
| CNT/PyBA-LOx | 73,7 | 1265 | 17,2 | 0,91·10$^3$ | 3,9 | 0,25-3,5 | 89 |
| ERGO/CNT/PyBA -GOx | 13,1 | 102 | 7,76 | 4,54·10$^4$ | 5,5 | 0,15-2,1 | 43,3 |
| ERGO/CNT/PyBA -LOx | 8,25 | 43,1 | 5,23 | 8,12·10$^3$ | 5,9 | 0,25-3,0 | 108 |
| **An example according to the invention** GR/fPyBA-GOx | 11,2 | 73,9 | 6, 60 | 5,31·10$^4$ | 25,0 | 0,25-3,0 | 65 |
| An example according to the invention GR/fPyBA-LOx | 0,75 | 42,4 | 56,5 | 8,93·10$^4$ | 18,8 | 0,05-0,55 | 23 |
| An example according to the invention GR/fPyBA-AOx$_{ethanol}$ | 4,7 | 43,4 | 9,23 | 1,38·10$^4$ | 23,2 | 0,5-2,5 | 184 |
| An example according to the invention GR/fPyBA-AOx$_{methanol}$ | 2,09 | 33,6 | 16,1 | 3,10·10$^4$ | 23,2 | 0,5-1,5 | 276 |
| GR/fPyBA-GDH | 20,7 | 644 | 31,1 | - | - | 0,25-4,5 | 218 |

(continued)

| The studied system | $K_M$ [mM] | $j_{max}$ [μA cm$^{-2}$] | S [μA cm$^{-2}$ mM$^{-1}$] | $k_{cat}/K_M$ [M$^{-1}$ s$^{-1}$] | $k_s$ [s$^{-1}$] | LR [mM] | LOD [μM] |
|---|---|---|---|---|---|---|---|
| OT-$C_{70}$@AuNPs-GDH | 24,1 | 628,9 | 26,1 | - | - | 0,25-12 | 350 |
| Abbreviations: CNT/PyBA-carbon nanotubes modified with pyrrole benzoic acid, AG-glutaraldehyde, EDC- 1-ethyl-3-(3-dimethylaminpropyl)carbodiimide (EDC), ERGO/CNT/PyBA-hybrid system composed of electrochemically reduced graphene oxide and carbon nanotubes modified with pyrrole benzoic acid, OT-$C_{70}$@AuNPs-gold nanoparticles modified with fullerene $C_{70}$, | | | | | | | |

**Summary**

As can be seen from the above examples, regardless of the type of biomolecule forming a combination with the matrix developed by the inventors, a significant increase in the charge transfer rate across the interface is significantly increased by at least one order of magnitude, which ensures that a system with extremely high conductivity, and thereby perfect sensitivity is obtained. Furthermore, as discussed above, the systems based on the graphene matrix modified with 4-(pyrrol-1-yl) benzoic acid proposed by the inventors of the present invention are stable and form a stable matrix for the immobilization of numerous, diverse biological molecules (proteins, enzymes, etc.) through the formation of an amide bond. Such systems are also characterized by the reversibility of the reactions utilized for possible determination of the analyte level, and are therefore reusable. The preparation of such systems is not time-consuming, and thus the cost of getting usable such systems, for example in biosensors, is significantly reduced. Thus, the proposed solution is free from any disadvantages observed in the prior art systems and solves many of problems in the prior art observed and indicated by the inventors in the present invention.

Without being bound by any particular theory, the particularly advantageous properties of the graphene matrix according to the invention, in which graphene is a chemically modified with the pyrrole benzoic acid derivative, result from the presence of functional groups (carboxyl) of a pyrrole benzoic acid derivative exposed to binding of biomolecules, which is also a very efficient electron relay between the redox center of the enzyme and the electrode substrate, but also stabilizes the system and prevents combining of graphene flakes (sheets) due to π-π and electrostatic interactions. Fig. 15 shows schematically the structure of such system (biosensor), showing the formation of a covalent bond between a graphene matrix and a biomolecule. The new method of graphene modification and proper arrangement and selection of system elements significantly affect its bicelectrocatalytic reactivity. As a result, the obtaining stable with high sensitivity system can be widely used in numerous practical applications both in the field of bioelectrochemistry and chemistry of nanostructured materials, but also in the food industry and medicine for the production of biosensors and other electronic devices.

**Claims**

1. A nanostructured carbon matrix modified with a pyrrole benzoic acid derivative with exposed, unbound carboxyl groups capable of forming an amide bond, **characterized in that** the nanostructured carbon matrix is a graphene matrix and the pyrrole benzoic acid derivative is a 4-(pyrrol-1-yl)benzoic acid derivative that is covalently bound to nanostructured carbon matrix and together with the carbon atoms of the carbon nanostructured matrix forms the structure of the formula A or B,

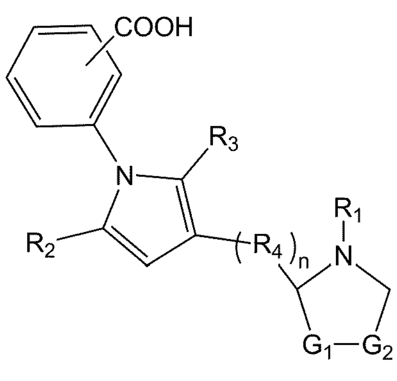
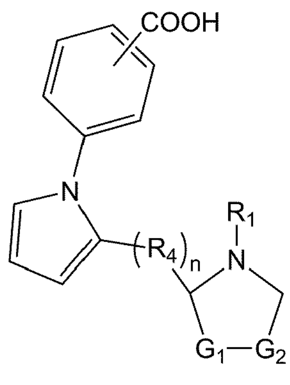

**A** **B**

where:

$G_1$ and $G_2$ are adjacent carbon atoms on the surface of the nanostructured carbon matrix,
$R_1$ is a hydrogen atom, a $C_{1-6}$ alkyl group, a $C_{2-6}$ alkenyl group,
a $C_{2-6}$ alkynyl group, a $C_{3-6}$ cycloalkyl group, an aryl group or
a $C_{1-6}$ alkoxy group
$R_2$ and $R_3$ are independently hydrogen atom, and where the 6-membered aromatic ring is substituted in the ortho, meta or para position by the carboxyl group, and
n is an integer number of 0 or 1, and
$R_4$, when present, is a $C_{1-6}$ alkyl group, a $C_{2-6}$ alkenyl group, a $C_{2-6}$ alkynyl group,
and wherein the pyrrole ring is bonded in the 1 or 2 position with a pyrrolidine ring bonded directly or through the linker $R_4$ with the $G_1$ and $G_2$ atoms of the nanostructured carbon matrix and where the structure of formula A or B may exist in different stereoisomeric forms as well as quaternary ammonium or carboxylic salts.

**2.** The nanostructured carbon matrix, according to the claim 1, **characterized in that**, n equals zero and $R_1$ represents a hydrogen atom, a $C_{1-6}$ alkyl group, a $C_{2-6}$ alkenyl group, a $C_{2-6}$ alkynyl group, a $C_{3-6}$ cycloalkyl group or aryl, preferably $R_1$ represents a hydrogen atom, a $C_{1-6}$ alkyl group, a $C_{2-6}$ alkenyl group or a $C_{2-6}$ alkynyl group, more preferably $R_1$ represents a hydrogen atom, a $C_{1-3}$ alkyl group, a $C_{2-3}$ alkenyl group, a $C_{2-3}$ alkynyl group and most preferably $R_1$ represents a hydrogen atom or a $C_{1-3}$ alkyl group.

**3.** The nanostructured carbon matrix, according to the claim 2, **characterized in that**, it forms the structure of the formula B'

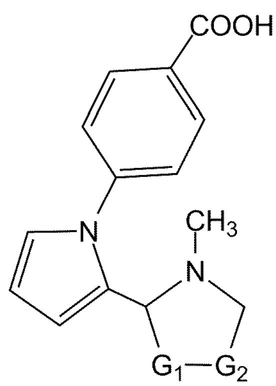

Formula B'

**4.** The nanostructured carbon matrix according to any of the claims 1-3, **characterized in that**, the graphene matrix is a graphene-based, graphene oxide based or a combination thereof based matrix.

**5.** A nanostructured carbon matrix system, particularly for use in the application in biosensors, comprising a nanostructured carbon matrix and at least one receptor element, **characterized in that**, the nanostructured carbon matrix

is nanostructured carbon matrix as defined in any of the claims 1-4, and the receptor element is any receptor element capable of forming a covalent amide bond with exposed carboxyl group of the pyrrole benzoic acid modifying the surface of graphene.

6. The system according to the claim 5, **characterized in that**, the receptor element is any biomolecule specific for a particular analyte.

7. The system according to claim 6 **characterized in that**, the biomolecule is selected from enzymes, immunoproteins, antigens, non-immunological proteins, immunoglobulin binding proteins, sugar-binding proteins, fatty acids and fatty acid esters, ligands, aptamers, polypeptides or oligopeptides capable of forming a ligand binding.

8. The system according to claim 7 **characterized in that**, the receptor element is an enzyme, preferably oxidoreductase enzyme more preferably, the enzyme is an oxidase enzyme, in particular selected from the group consisting of glucose oxidase, alcohol oxidase and lactate oxidase and most preferably the enzyme is a dehydrogenase enzyme, in particular glucose dehydrogenase.

9. The biosensor comprising a carbon nanostructure system according to any of the claims from 5 to 8 immobilized on a conductive substrate capable of further transmitting a signal, preferably, an electrical signal.

10. The biosensor according to the claim 9 **characterized in that** the conducting substrate is a carbon substrate, in particular substrate selected from glassy carbon and graphite.

11. The biosensor according to the claim 9 **characterized in that** the conducting substrate is a metallic substrate, in particular a gold, platinum or palladium substrate.

12. A method for the determination of an analyte in a sample, including steps:

- contacting the biosensor as defined in any of claims 9-11 with a sample containing the determined analyte, and
- monitoring of changes in the electrical characteristics of the system.

13. The method according to the claim 12 **characterized in that** the change in the electrical characteristics of the system over time indicates the presence of the determined analyte in the sample, preferably the change in the electrical characteristics of the system is selected from changes in the conductance of the system, system resistance, system inductance, or changes in potential of the system, more preferably from a change in system conductance or system resistance.

14. The method according to any of claims 12-13 **characterized in that** the sample is a liquid sample.

15. The method according to any of claims 12-13 **characterized in that** the sample is a gaseous sample.

16. The method according to the claim 14 **characterized in that** the analyte is a molecule capable of both oxidation and reduction, and preferably a molecule capable of oxidation.

17. Use of the 4-(pyrrol-1-yl)benzoic acid derivative, preferably the 4-(2-formyl-1H-pyrrol-1-yl)benzoic acid derivative, for modification of the nanostructured graphene matrix surface, wherein a covalent bond between the nanostructured graphene matrix and the pyrrole benzoic acid derivative is formed resulting in the nanostructured carbon matrix of formula A or B as defined in Claim 1, in which the carboxyl groups of the 4-(pyrrol-1-yl)benzoic acid derivative are unbonded, exposed and capable of forming an amide bond.

18. The use of a biosensor as defined in claims 9-11 as at least one electrode in a biofuel cell.

**Patentansprüche**

1. Nanostrukturierte Kohlenstoffmatrix , modifiziert mit einem Pyrrolbenzoesäure-Derivat mit freiliegenden, ungebundenen Carboxylgruppen, die eine Amidbindung bilden können, **dadurch gekennzeichnet, dass** die nanostrukturierte Kohlenstoffmatrix eine Graphenmatrix ist und das Pyrrolbenzoesäure-Derivat ein 4-(Pyrrol-1-yl)benzoesäure-Derivat ist, das kovalent an die nanostrukturierte Kohlenstoffmatrix gebunden ist und zusammen mit den Kohlenstoffatomen der nanostrukturierten Kohlenstoffmatrix die Struktur der Formel A oder B bildet,

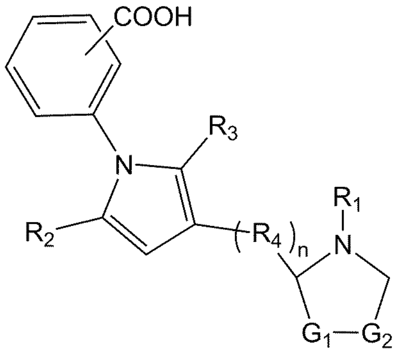

A

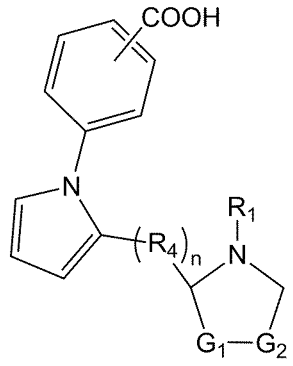

B

wobei:

$G_1$ und $G_2$ benachbarte Kohlenstoffatome auf der Oberfläche der nanostrukturierten Kohlenstoffmatrix sind, $R_1$ ist ein Wasserstoffatom, eine $C_{1-6}$-Alkylgruppe, eine $C_{2-6}$-Alkenylgruppe, eine $C_{2-6}$-Alkinylgruppe, eine $C_{3-6}$-Cycloalkylgruppe, eine Arylgruppe oder eine $C_{1-6}$-Alkoxygruppe $R_2$ und $R_3$ voneinander unabhängiges Wasserstoffatom sind, und wobei der 6-gliedrige aromatische Ring in ortho-, meta- oder para-Stellung durch die Carboxylgruppe ersetzt wird, und
n ist eine ganze Zahl im Bereich von 0 oder 1, und
$R_4$, wenn vorhanden, eine $C_{1-6}$-Alkylgruppe, eine $C_{2-6}$-Alkenylgruppe, eine $C_{2-6}$-Alkinylgruppe ist,
und wobei der Pyrrolring in der 1. oder 2. Position mit dem Pyrrolidinring verbunden ist, der direkt oder über einen Verbinder $R_4$ mit den $G_1$- und $G_2$-Atomen der nanostrukturierten Kohlenstoffmatrix verbunden ist,
und wobei die Struktur der Formel A oder B in verschiedenen stereoisomeren Formen, sowie als quaternäre Ammonium- oder Carbonsäure-Salze auftreten kann.

2. Eine nanostrukturierte Kohlenstoffmatrix nach Anspruch 1, **dadurch gekennzeichnet, dass** n gleich Null ist und R1 ein Wasserstoffatom, eine C1-6-Alkylgruppe, eine $C_{2-6}$-Alkenylgruppe, eine C2-6-Alkinylgruppe, eine C3-6-Cycloalkylgruppe oder Aryl darstellt, vorzugsweise stellt R1 ein Wasserstoffatom, eine $C_{1-6}$-Alkylgruppe, eine C2-6-Alkenylgruppe oder eine C2-6-Alkinylgruppe dar, noch bevorzugter stellt R1 ein Wasserstoffatom, eine C1-3-Alkylgruppe, eine $C_{2-3}$-Alkenylgruppe, eine C2-3-Alkinylgruppe und höchst bevorzugt stellt R1 ein Wasserstoffatom oder eine $C_{1-3}$-Alkylgruppe dar.

3. Eine nanostrukturierte Kohlenstoffmatrix nach Anspruch 2, **dadurch gekennzeichnet, dass** sie die Struktur der Formel B' bildet

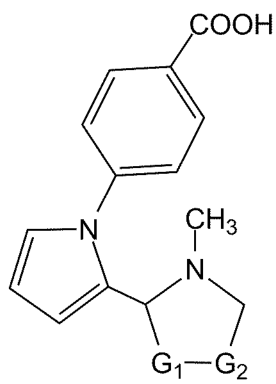

Formel B'

4. Eine nanostrukturierte Kohlenstoffmatrix nach einem der Ansprüche 1 bis 3, **dadurch gekennzeichnet, dass** die Graphenmatrix auf Graphen, Graphenoxid oder einer Kombination davon basiert.

**5.** Ein nanostrukturiertes Kohlenstoffmatrixsystem, insbesondere zur Verwendung in Biosensoren, umfassend eine nanostrukturierte Kohlenstoffmatrix und mindestens einen Rezeptor, **dadurch gekennzeichnet, dass** die nanostrukturierte Kohlenstoffmatrix eine nanostrukturierte Kohlenstoffmatrix ist, wie sie in einem der Ansprüche 1 bis 4 definiert ist, und der Rezeptor ein beliebiger Rezeptor ist, der in der Lage ist, eine kovalente Amidbindung mit einer exponierten Carboxylgruppe der Pyrrolbenzoesäure zu bilden, die die Oberfläche von Graphen modifiziert.

**6.** Ein System nach Anspruch 5, **dadurch gekennzeichnet, dass** der Rezeptor ein beliebiges, für den bestimmten Analyten spezifisches Biomolekül ist.

**7.** Ein System nach Anspruch 6, **dadurch gekennzeichnet, dass** das Biomolekül aus Enzymen, Immunoproteinen, Antigenen, nicht-immunologischen Proteinen, Immunglobulinbindenden Proteinen, zuckerbindenden Proteinen, Fettsäuren und Fettsäureestern, Liganden, Aptameren, Polypeptiden oder Oligopeptiden, die eine Ligandenbindung herstellen können, ausgewählt ist.

**8.** Ein System nach Anspruch 7, **dadurch gekennzeichnet, dass** der Rezeptor ein Enzym ist, vorzugsweise Oxidoreduktase, weiter bevorzugt ist das Enzym Oxidase, insbesondere aus einer Gruppe mit Glukoseoxidase, Alkoholoxidase und Laktatoxidase ausgewählt, und am höchsten bevorzugt ist ein Dehydrogenase-Enzym, insbesondere Glukose-Dehydrogenase.

**9.** Ein Biosensor, umfassend ein Kohlenstoff-Nanostruktur-System nach einem der Ansprüche 5 bis 8, das auf einem leitfähigen Substrat aufgetragen ist, das in der Lage ist, ein Signal, vorzugsweise ein elektrisches Signal, weiter zu übertragen.

**10.** Ein Biosensor nach Anspruch 9, **dadurch gekennzeichnet, dass** das leitende Substrat ein Kohlenstoffsubstrat ist, insbesondere ein Substrat aus Glaskohlenstoff und Graphit.

**11.** Ein Biosensor nach Anspruch 9, **dadurch gekennzeichnet, dass** das leitende Substrat ein metallisches Substrat, insbesondere ein Substrat aus Gold, Platin oder Palladium ist.

**12.** Ein Verfahren zur Bestimmung eines Analyten in einer Probe mit den folgenden Schritten:

- Ein Biosensor nach einem der Ansprüche 9-11 mit einer Probe, die den bestimmten Analyten enthält, in Kontakt setzen und
- die Änderungen der elektrischen Eigenschaften des Systems beobachten.

**13.** Ein Verfahren nach Anspruch 12, **dadurch gekennzeichnet, dass** die Änderung der elektrischen Eigenschaften des Systems über die Zeit anzeigt, ob ein bestimmter Analyt in der Probe enthalten sei, wobei die Änderung der elektrischen Eigenschaften des Systems vorzugsweise Änderungen des Leitwerts des Systems, des Systemwiderstands, der Systeminduktivität oder Änderungen des Potentials des Systems umfassen soll, besonders bevorzugt Änderungen des Systemleitwerts oder des Systemwiderstands hervorruft.

**14.** Ein Verfahren nach einem der Ansprüche 12-13, **dadurch gekennzeichnet, dass** die Probe eine flüssige Probe ist.

**15.** Ein Verfahren nach einem der Ansprüche 12-13, **dadurch gekennzeichnet, dass** die Probe eine gasförmige Probe ist.

**16.** Ein Verfahren nach Anspruch 14, **dadurch gekennzeichnet, dass** der Analyt ein Molekül ist, das sowohl zur Oxidation als auch zur Reduktion fähig ist, und vorzugsweise ein Molekül, das zur Oxidation fähig ist.

**17.** Verwendung eines 4-(Pyrrol-1-yl)benzoesäure-Derivats, vorzugsweise des 4-(2-Formyl-1H-pyrrol-1-yl)benzoesäure-Derivats zur Veränderung der Oberfläche der nanostrukturierten Graphenmatrix, wobei eine kovalente Bindung zwischen der nanostrukturierten Graphenmatrix und dem Pyrrolbenzoesäure-Derivat entsteht, die zur Bildung der nanostrukturierten Kohlenstoffmatrix der Formel A oder B, wie in Anspruch 1 definiert, führt, in der die Carboxylgruppen des 4-(Pyrrol-1-yl)benzoesäurederivats ungebunden, exponiert und zur Bildung einer Amidbindung fähig sind.

**18.** Verwendung eines Biosensors nach einem der Ansprüche 9-11 als mindestens eine Elektrode in einer Biobrennstoffzelle.

## Revendications

**1.** Matrice de carbone nanostructurée modifiée avec un dérivé d'acide pyrrole benzoïque avec des groupes carboxyle non liés exposés capables de former une liaison amide, **caractérisée en ce que** la matrice de carbone nanostructurée est une matrice de graphène et le dérivé d'acide pyrrole benzoïque est un dérivé d'acide 4-(pyrrol-1-yl)benzoïque qui est lié de manière covalente à une matrice de carbone nanostructurée et forme avec les atomes de carbone de la matrice de carbone nanostructurée la structure de formule A ou B,

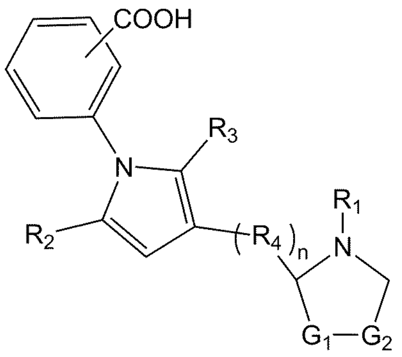

A

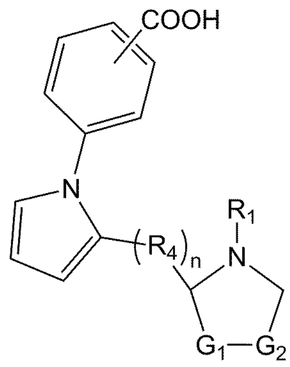

B

dans lequel:

$G_1$ et $G_2$ sont des atomes de carbone adjacents à la surface de la matrice de carbone nanostructurée,
$R_1$ est un atome d'hydrogène, un groupe alkyle en $C_{1-6}$, un groupe alcényle en $C_{2-6}$, un groupe alcynyle en $C_{2-6}$, un groupe cycloalkyle en $C_{3-6}$, un groupe aryle ou un groupe alcoxy en $C_{1-6}$ $R_2$ et $R_3$ sont indépendamment un atome d'hydrogène, et où
le cycle aromatique à 6 chaînons est substitué en position ortho, méta ou para par le groupe carboxyle, et
n est un nombre entier de 0 ou 1, et
$R_4$, lorsqu'il est présent, est un groupe alkyle en $C_{1-6}$, un groupe alcényle en $C_{2-6}$, un groupe alcynyle en $C_{2-6}$, et dans lequel le cycle pyrrole est lié en position 1 ou 2 avec un cycle pyrrolidine lié directement ou par l'intermédiaire du lieur $R_4$ avec les atomes $G_1$ et $G_2$ de la matrice carbonée nanostructure et où la structure de formule A ou B peut exister sous différentes formes stéréoisomères ainsi que des sels d'ammonium quaternaire ou carboxyliques.

**2.** Matrice carbonée nanostructurée, selon la revendication 1, **caractérisée en ce que**, n est égal à zéro et R1 représente un atome d'hydrogène, un groupe alkyle $C_{1-6}$, un groupe alcényle $C_{2-6}$, un groupe alcynyle $C_{2-6}$, un groupe $C_{3-6}$ groupe cycloalkyle ou aryle, de préférence R1 représente un atome d'hydrogène, un groupe alkyle $C_{1-6}$, un groupe alcényle $C_{2-6}$ ou un groupe alcynyle $C_{2-6}$, plus préférablement R1 représente un atome d'hydrogène, un groupe alkyle $C_{1-3}$, un groupe $C_{2-3}$ groupe alcényle, un groupe alcynyle en $C_{2-3}$ et le plus préférablement $R_1$ représente un atome d'hydrogène ou un groupe alkyle en $C_{1-3}$.

**3.** Matrice carbonée nanostructurée, selon la revendication 2, **caractérisée en ce qu'**elle forme la structure de formule B'

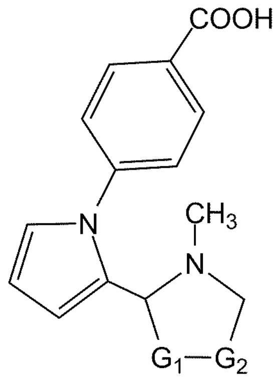

Formule B′

4. Matrice de carbone nanostructurée selon l'une quelconque des revendications 1 à 3, **caractérisée en ce que** la matrice de graphène est une matrice à base de graphène, à base d'oxyde de graphène ou une combinaison de celles-ci.

5. Système de matrice carbonée nanostructurée, notamment destiné à être utilisé dans l'application dans les biocapteurs, comprenant une matrice carbonée nanostructurée et au moins un élément récepteur, **caractérisé en ce que** la matrice carbonée nanostructurée est une matrice carbonée nanostructurée telle que définie dans l'une quelconque des revendications 1-4, et l'élément récepteur est tout élément récepteur capable de former une liaison amide covalente avec le groupe carboxyle exposé de l'acide pyrrole benzoïque modifiant la surface du graphène.

6. Système selon la revendication 5, **caractérisé en ce que** l'élément récepteur est toute biomolécule spécifique d'un analyte particulier.

7. Système selon la revendication 6 **caractérisé en ce que**, la biomolécule est choisie parmi les enzymes, les immunoprotéines, les antigènes, les protéines non immunologiques, les protéines liant les immunoglobulines, les protéines liant les sucres, les acides gras et esters d'acides gras, les ligands, les aptamères, les polypeptides ou oligopeptides capables de former une liaison de ligand.

8. Système selon la revendication 7, **caractérisé en ce que** l'élément récepteur est une enzyme, de préférence une enzyme oxydoréductase plus préférablement, l'enzyme est une enzyme oxydase, en particulier choisie dans le groupe constitué par la glucose oxydase, l'alcool oxydase et la lactate oxydase et le plus préférablement la enzyme est une enzyme déshydrogénase, en particulier la glucose déshydrogénase.

9. Biocapteur comprenant un système de nanostructure de carbone selon l'une quelconque des revendications 5 à 8 immobilisé sur un substrat conducteur capable de transmettre en outre un signal, de préférence, un signal électrique.

10. Biocapteur selon la revendication 9 **caractérisé en ce que** le substrat conducteur est un substrat de carbone, notamment un substrat choisi parmi le carbone vitreux et le graphite.

11. Biocapteur selon la revendication 9 **caractérisé en ce que** le substrat conducteur est un substrat métallique, notamment un substrat d'or, de platine ou de palladium.

12. Méthode de détermination d'un analyte dans un échantillon, comprenant les étapes :

    - mettre en contact le biocapteur tel que défini dans l'une quelconque des revendications 9 à 11 avec un échantillon contenant l'analyte déterminé, et
    - le suivi de l'évolution des caractéristiques électriques du système.

13. Procédé selon la revendication 12 **caractérisé en ce que** le changement des caractéristiques électriques du système au cours du temps indique la présence de l'analyte déterminé dans l'échantillon, de préférence le changement des caractéristiques électriques du système est choisi parmi les changements de la conductance de le système, la résistance du système, l'inductance du système ou les changements de potentiel du système, plus préférablement à partir d'un changement de la conductance du système ou de la résistance du système.

**14.** Procédé selon l'une quelconque des revendications 12 à 13, **caractérisé en ce que** l'échantillon est un échantillon liquide.

**15.** Procédé selon l'une quelconque des revendications 12 à 13, **caractérisé en ce que** l'échantillon est un échantillon gazeux.

**16.** Procédé selon la revendication 14, **caractérisé en ce que** l'analyte est une molécule capable à la fois d'oxydation et de réduction, et de préférence une molécule capable d'oxydation.

**17.** Utilisation du dérivé d'acide 4-(pyrrol-1-yl)benzoïque, de préférence du dérivé d'acide 4-(2-formyl-1H-pyrrol-1-yl)benzoïque, pour la modification de la surface de matrice de graphène nanostructurée, dans laquelle une liaison covalente entre la matrice de graphène nanostructurée et le dérivé d'acide pyrrole benzoïque est formé conduisant à la matrice carbonée nanostructurée de formule A ou B telle que définie à la revendication 1, dans laquelle les groupes carboxyle du dérivé d'acide 4-(pyrrol-1-yl)benzoïque sont non lié, exposé et capable de former une liaison amide.

**18.** Utilisation d'un biocapteur tel que défini dans les revendications 9 à 11 comme au moins une électrode dans une biopile à combustible.

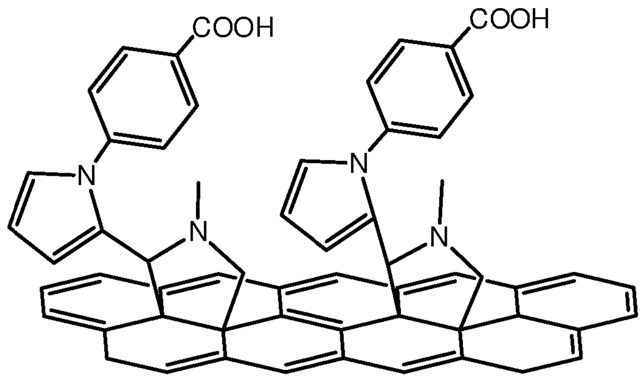

FIG. 1

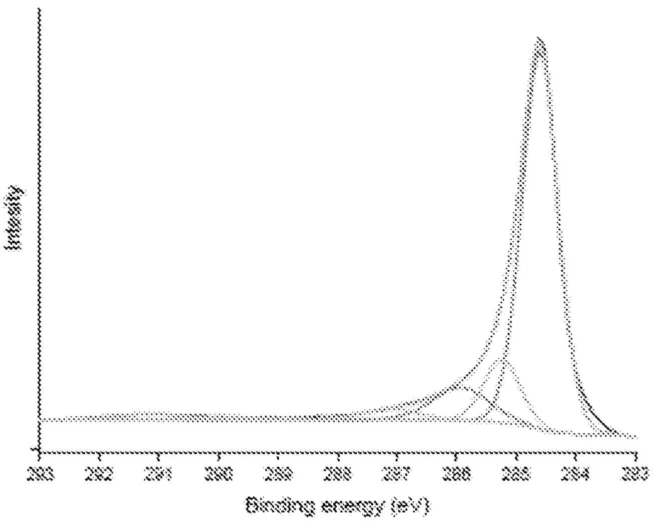


FIG. 2

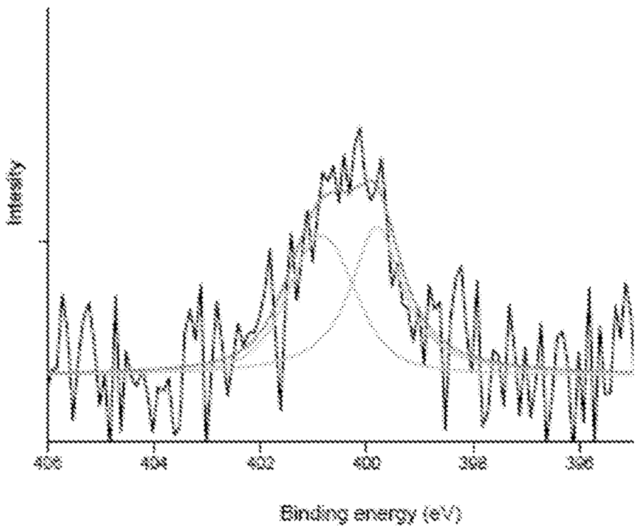


FIG. 3

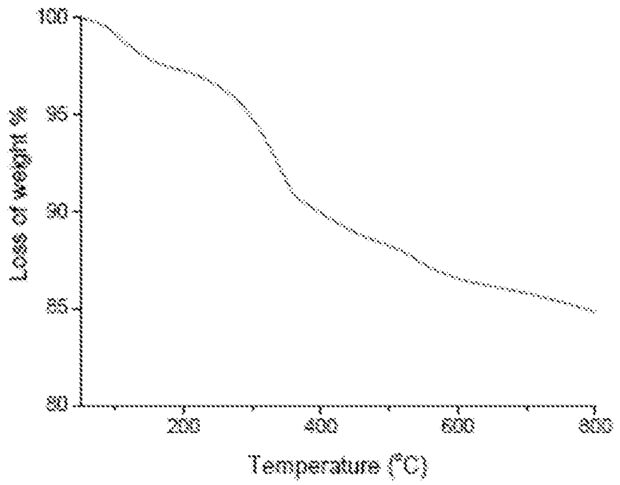


FIG. 4

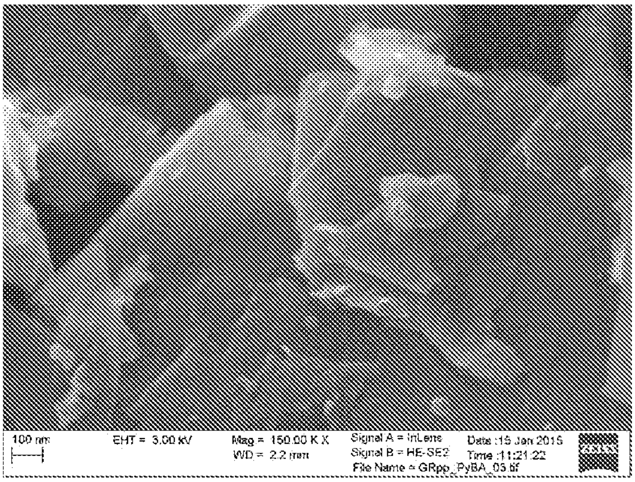


FIG. 5

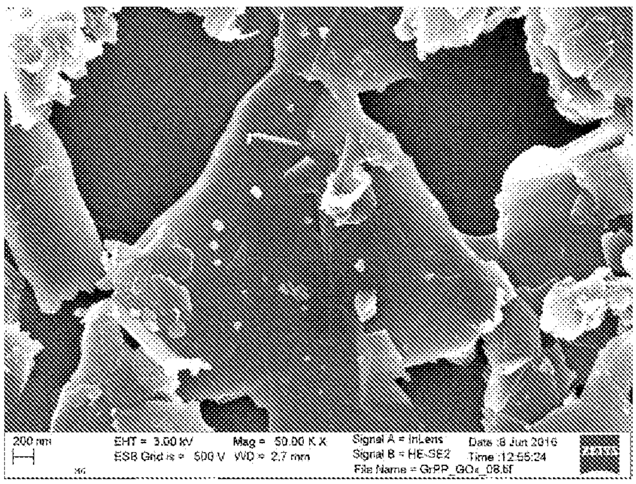


FIG. 6

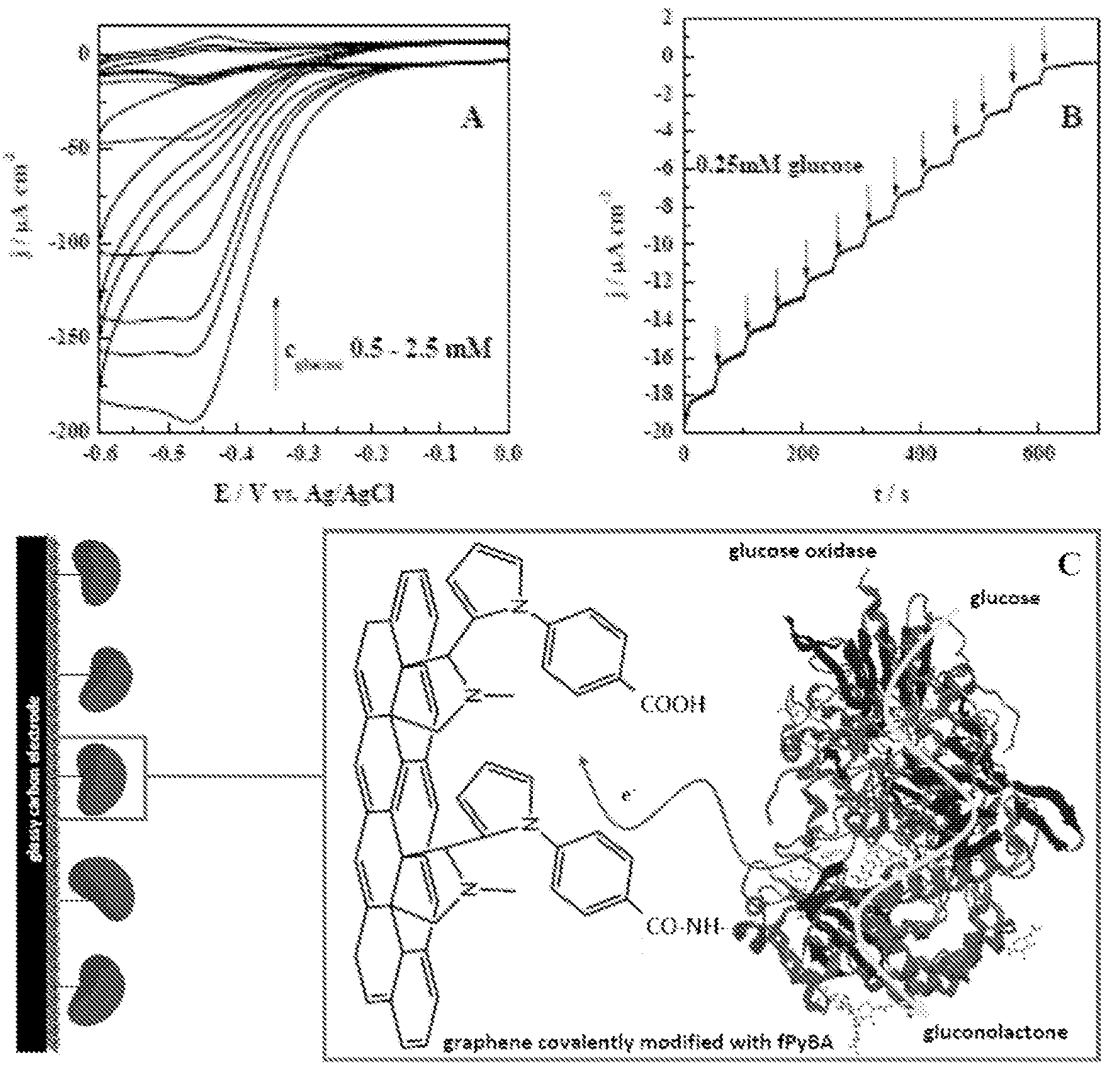
A
B
C
j / µA cm⁻²
E / V vs. Ag/AgCl
t / s
0.25mM glucose
glassy carbon electrode
glucose oxidase
glucose
COOH
CO-NH
e⁻
gluconolactone
graphene covalently modified with fPySA

FIG. 7

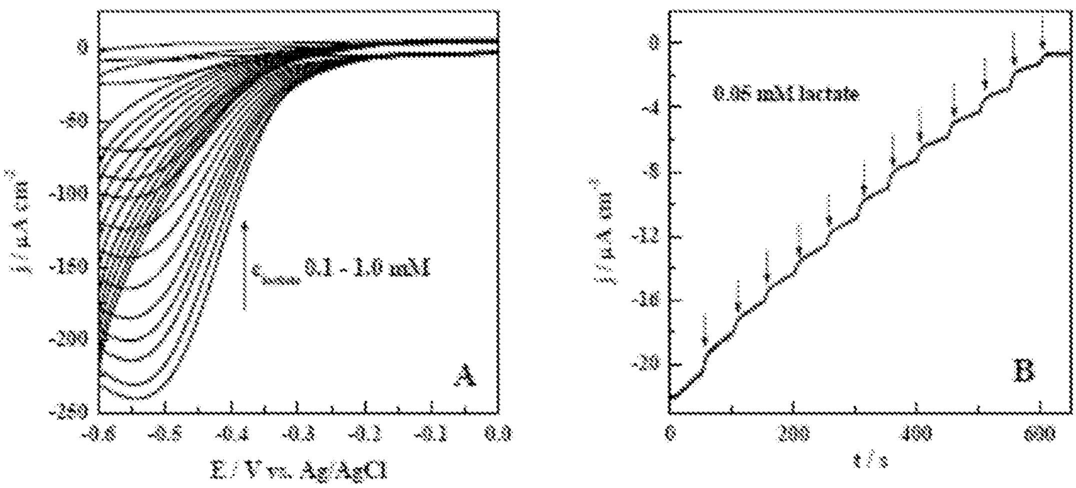
A
B
j / µA cm⁻²
E / V vs. Ag/AgCl
t / s
0.1 - 1.0 mM
0.05 mM lactate

FIG. 8

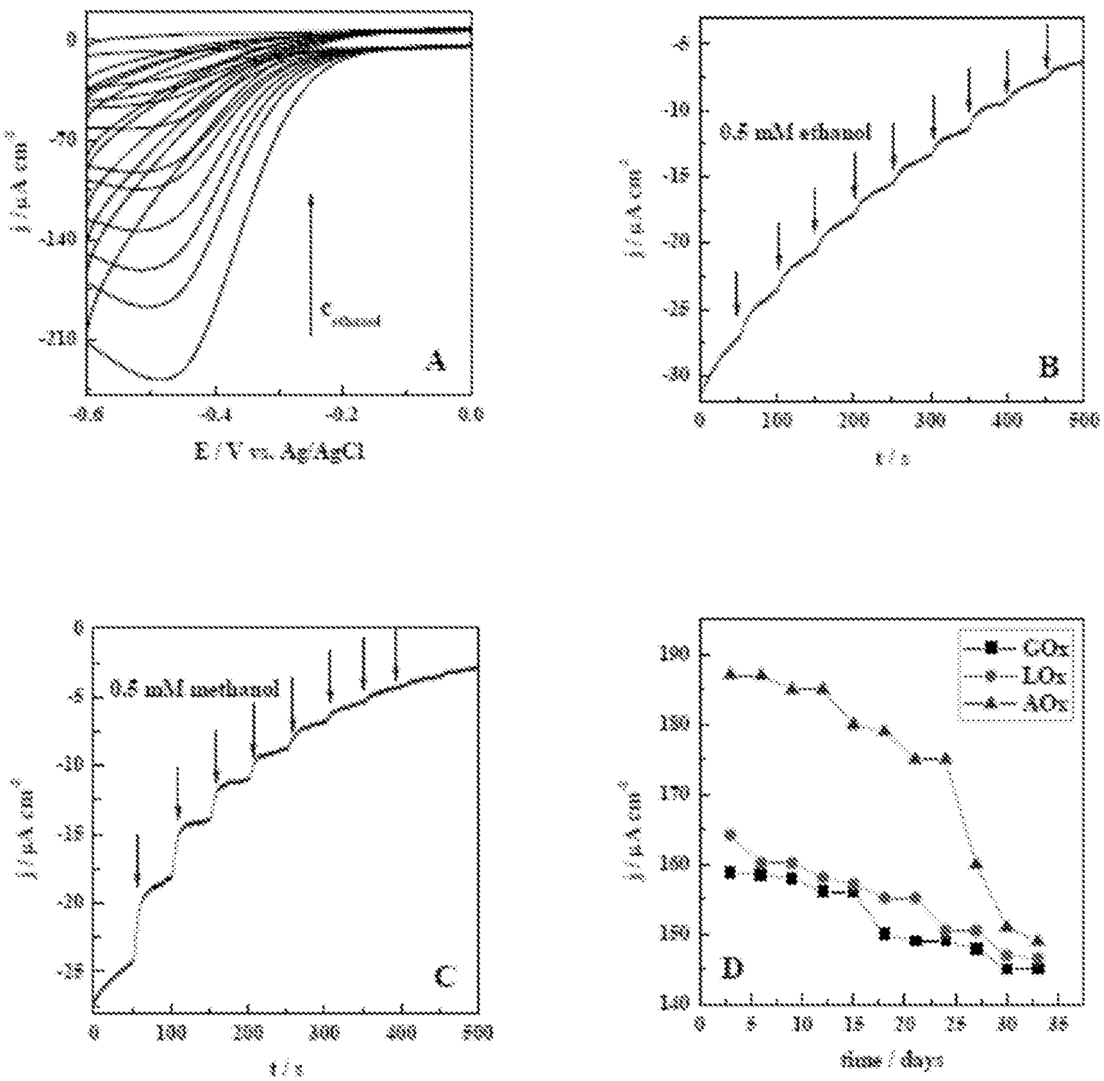
A
B
C
D
0.5 mM ethanol
0.5 mM methanol
GOx
LOx
AOx
E / V vs. Ag/AgCl
t / s
time / days

FIG. 9

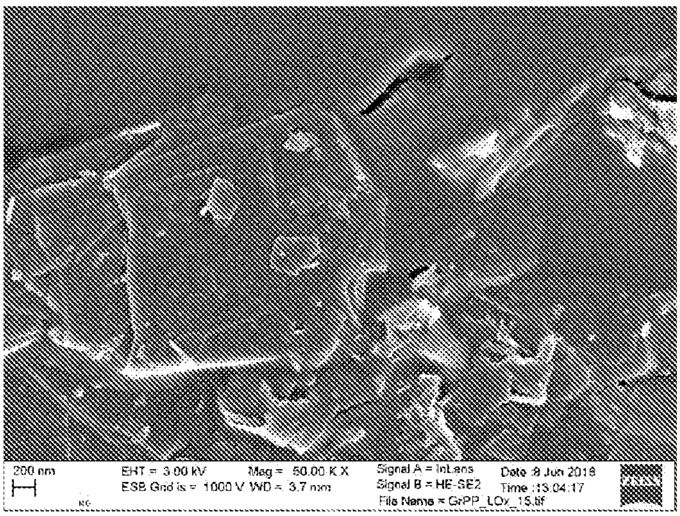
200 nm
EHT = 3.00 kV
ESB Grid is = 1000 V
Mag = 50.00 K X
WD = 3.7 mm
Signal A = InLens
Signal B = HE-SE2
File Name = GrPP_LOx_15.tif
Date :8 Jun 2018
Time :15:04:17

FIG. 10

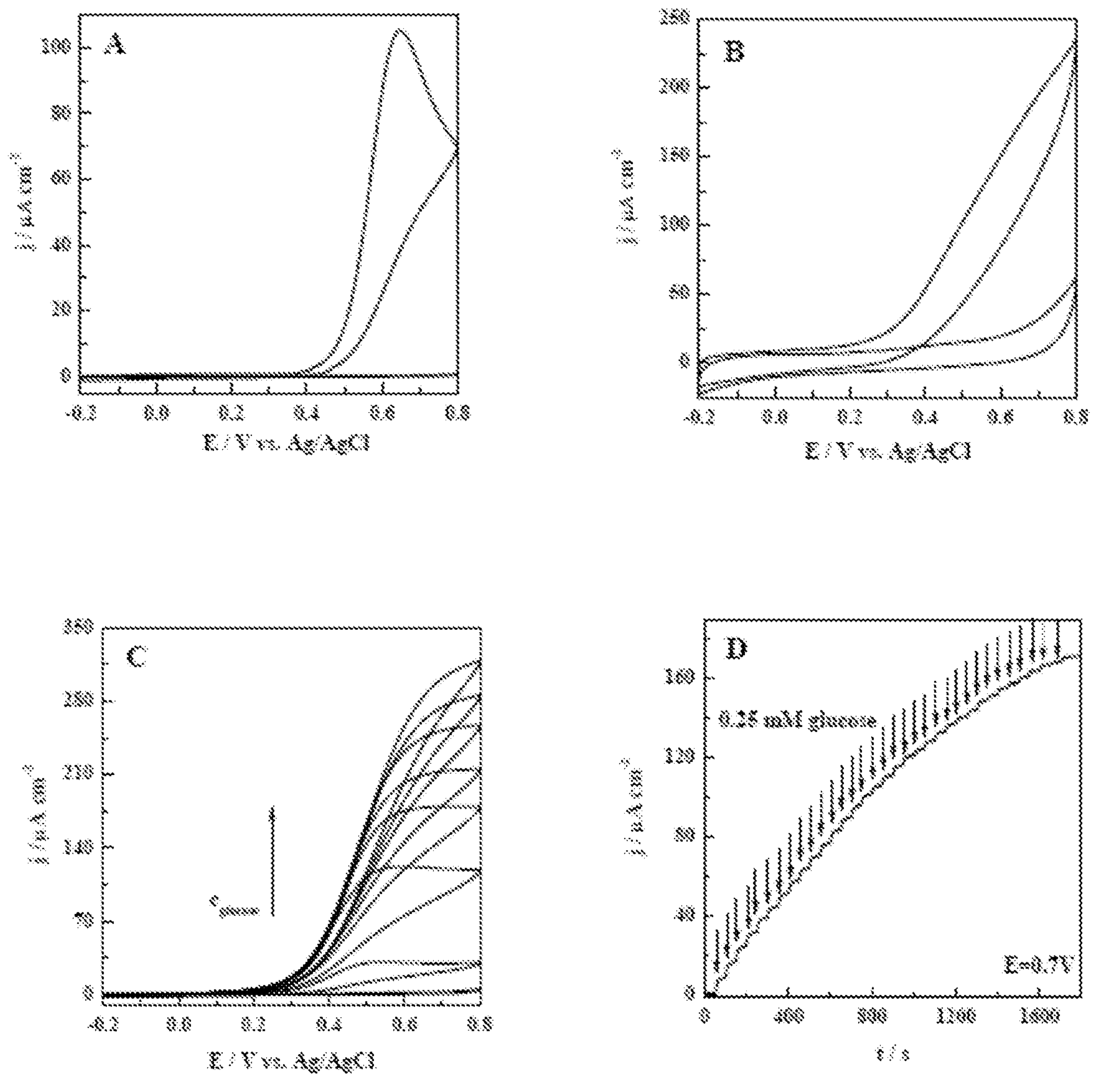
A
B
C
D
j / μA cm$^{-2}$
E / V vs. Ag/AgCl
$c_{glucose}$
0.25 mM glucose
E=0.7V
t / s

FIG. 11

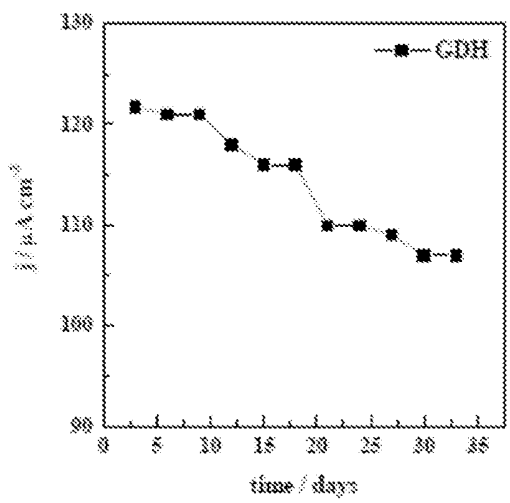
GDH
j / μA cm$^{-2}$
time / days

FIG. 12

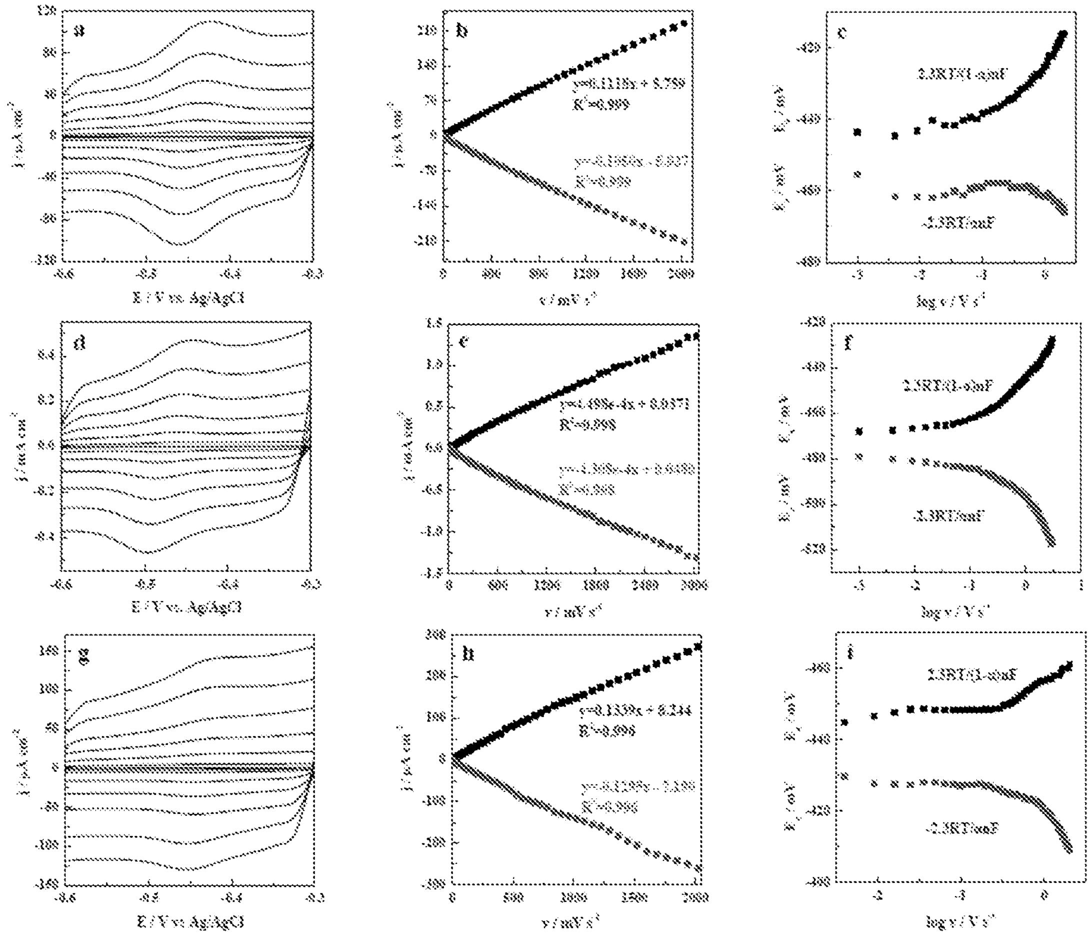

FIG. 13

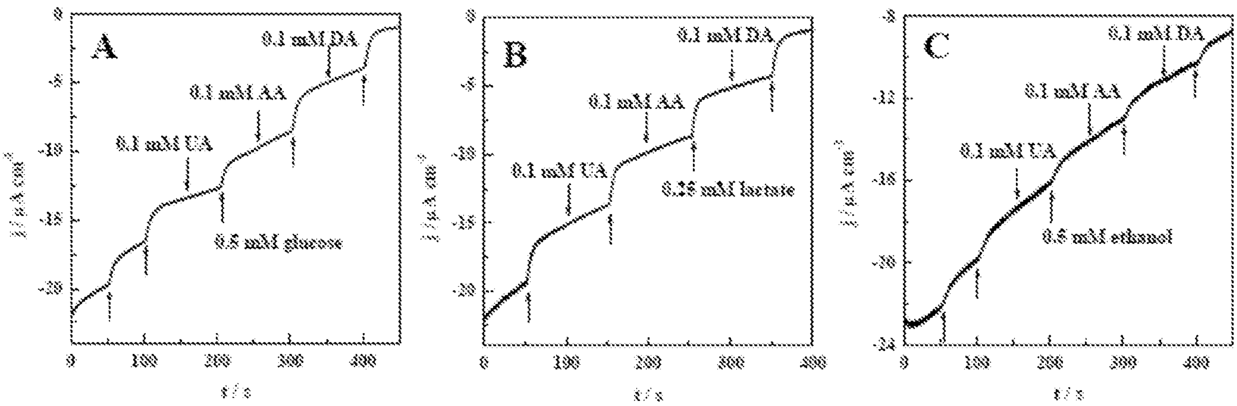
A
0.1 mM DA
0.1 mM AA
0.1 mM UA
0.5 mM glucose
B
0.1 mM DA
0.1 mM AA
0.1 mM UA
0.25 mM lactate
C
0.1 mM DA
0.1 mM AA
0.1 mM UA
0.5 mM ethanol
t / s

FIG. 14

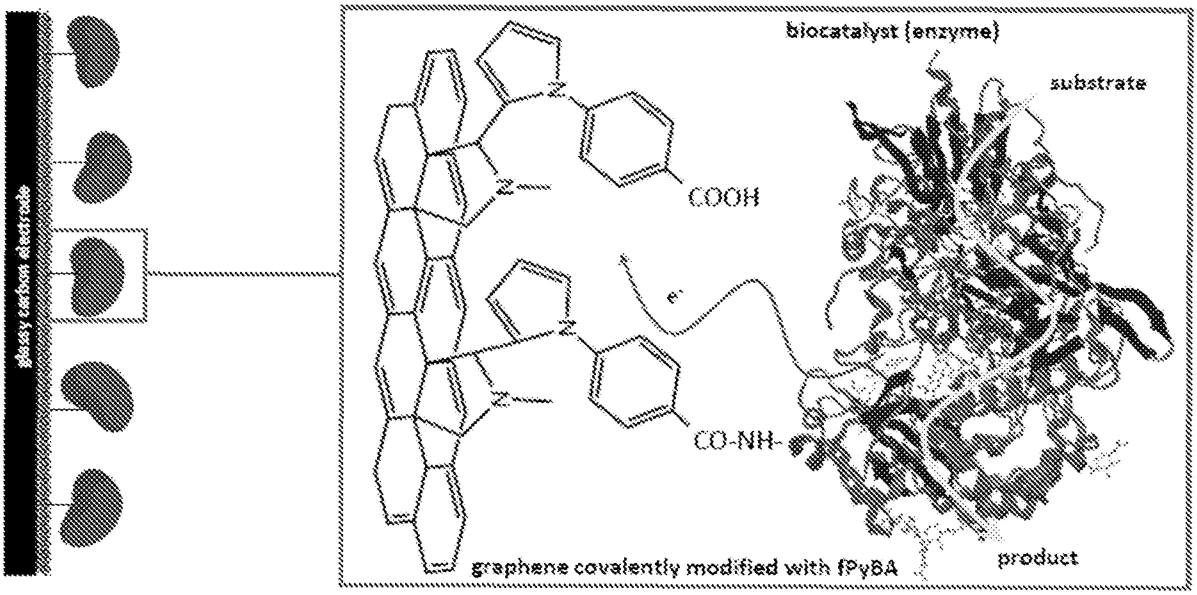
glassy carbon electrode
biocatalyst (enzyme)
substrate
product
graphene covalently modified with fPyBA

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130122531 A
- WO 1996036631 A
- US 20100139744 A
- WO 2016161255 A
- PL 207576
- WO 2014166535 A
- PL 222519
- US 20120214172 A
- US 20120116094 A
- US 20170014572 A
- WO 9636631 A
- CN 105348291


### Non-patent literature cited in the description


- **VAMVAKAKI, V ; TSAGERAKI, K. ; CHANIOTAKIS, N.** *Anal.,* 2006, vol. 78, 5538-5542
- **KOWALEWSKA B. ; JAKUBOW K.** *Sensors and Actuators B,* 2017, vol. 238, 852-861
- **LAURINAVICIUS et al.** PQQ-enzymes in biosensors design. *Biocybernetics and Biomedical Engineering,* 2001, vol. 21 (4), 21-35
- **KOWALEWSKA B. et al.** The impact of immobilization on the electrochemical performance, bioactivity and conformation of glucose oxidase enzyme. *Sensors and Actuators B,* 2017, vol. 238, 852-861
- **BANDODKAR AJ et al.** Tattoo-Based Noninvasive Glucose Monitorng: A Proof-of-Concept Study. *Anal. Chem.,* 2015, vol. 87, 394-398
- Noninvasive Alcohol Monitoring Using a Wearable Tattoo-Based Iontophoretic-Biosensing System. *ACS Sens.,* 2016, vol. 1, 1011-1019
- **HERNANDEZ, Y. et al.** High-yield production of graphene by liquid-phase exfoliation of graphite. *Nat. Nanotechnol.,* 2008, vol. 3 (9), 563-568
- **QUINTANA, M. et al.** Functionalization of Graphene via 1,3-Dipolar Cycloaddition. *ACS Nano,* 2010, vol. 4 (6), 3527-3533
- **QUINTANA, M et al.** Selective organic functionalization of graphene bulk or graphene edges. *Chem. Commun.,* 2011, vol. 47 (33), 9330-9332
- **LIU, HL et al.** Layered graphene nanostructures functionalized with NH2-rich polyelectrolytes through self-assembly: Cu (II) detection. *J. Mater. Chem. B,* 2014, vol. 2 (16), 2212-2219
- **SOME, S. et al.** High-Quality Reduced Graphene Oxide by a Dual-Function Chemical Reduction and Healing Process. *Sci Rep-Uk,* 2013, 3